# EUROPEAN PATENT APPLICATION

(11) **EP 4 560 469 A1**
(43) Date of publication of application: **28.05.2025**
(21) Application number: 22956846.4
(22) Date of filing: 31.08.2022
(51) Int. Cl.: G06F 9/48, G06F 9/50

(54) **NODE CONFIGURATION METHOD, DEVICE AND SYSTEM**

(71) Applicant: Huawei Technologies Co., Ltd., Shenzhen, Guangdong 518129 (CN)
(72) Inventor: CHEN, Lin, Shenzhen, Guangdong 518129 (CN)
(74) Representative: MERH-IP Matias Erny Reichl Hoffmann Patentanwälte PartG mbB
(86) International application number: PCT/CN2022/116096
(87) International publication number: WO 2024/045016

(57) **Abstract**

A node configuration method is disclosed. The method includes: determining first configuration information, where the first configuration information includes first information, the first information indicates the first node to perform restarting, and an operator executed by the first node needs to be scaled out or scaled in, or an operator executed by an adjacent node of the first node needs to be scaled out or scaled in; and sending the first configuration information to the first node when the second node maintains execution of an operator task. In this application, only the node executing the operator (and the adjacent node of the node executing the operator) may be controlled to perform restarting, and another node except for the node executing the operator (and the adjacent node of the node executing the operator) may maintain normal operator execution without performing restarting and obtaining status data. This reduces impact of operator scaling on operating of a system node, and further reduces a delay of an entire task procedure.

## Description

### TECHNICAL FIELD

This application relates to the field of communication technologies, and in particular, to a node configuration method and apparatus, and a system.

### BACKGROUND

Stream computing: Stream computing is also referred to as streaming computing, and is a consecutive, low-delay, and event-triggered computing job. Stream computing may be implemented by a node system. The node system may include a plurality of service nodes responsible for operator execution and a controller node at a control side. An algorithm may be deployed on the plurality of service nodes for execution. Each service node may be responsible for executing a part of operators in the algorithm. After completing execution, the service node may transfer an execution result of the operator to an adjacent downstream node. Streaming computing generally includes a data input (data source), (one or more) processing operators, and a data output. There may be one or more data sources and data outputs.

For a stream computing task, there is a change in task traffic in different time periods. For example, the task is to collect statistics on transportation capacity in a city every day, and transportation capacity in a peak time period in the morning or evening of a day is significantly higher than that in another time period, so that stream data in the peak time period in the morning or evening is higher than that in the another time period. In this case, because the task traffic changes in real time, an initially allocated resource is always used for task computing. When the task traffic is small, only a part of resources are required for execution, resulting in a waste of resources. When the task traffic is large, even if all allocated resources are used for task execution, load pressure is high and a throughput capability is reduced. In view of this, for the stream computing task, resources need to be adjusted based on real-time traffic to match current task traffic.

In a current resource adjustment manner, in a process of executing a stream computing task, when task traffic changes, corresponding operator scaling is required. In this case, the controller node may trigger a checkpoint once, reallocate a resource such as a concurrent operator based on current task traffic, and control all nodes to perform restarting (in a restarting process, all the nodes stop an operator execution task), so that all the nodes continue to execute the operators. However, in this resource adjustment manner, resource adjustment can be performed only after an entire task is stopped. Further, stopping of the entire task results in large impact, and all the nodes of the task are affected.

It can be learned from the above that, in the conventional technology, when operator scaling of stream computing is performed, all the nodes need to perform restarting, resulting in a large delay of an entire task procedure.

### SUMMARY

This application provides a node configuration method and apparatus, and a system, to reduce impact of operator scaling on operating of a system node, and further reduce a delay of an entire task procedure.

According to a first aspect, this application provides a node configuration method, applied to a controller node, where the controller node is connected to a plurality of nodes, each of the nodes is configured to execute a part of operators in an algorithm, the plurality of nodes implement stream computing of the algorithm through data transmission, and the plurality of nodes include a first node and a second node. The method includes: determining first configuration information, where the first configuration information includes first information, the first information indicates the first node to perform restarting, and an operator executed by the first node needs to be scaled out or scaled in, or an operator executed by an adjacent node of the first node needs to be scaled out or scaled in; and sending the first configuration information to the first node when the second node maintains execution of an operator task.

In a possible implementation, when the second node maintains execution of the operator task, that is, when it is determined that the first node is a node executing operator scaling (or an adjacent node of the node executing operator scaling), and when it is determined that the second node is neither the node executing operator scaling nor the adjacent node of the node executing operator scaling, the controller node may send, to the first node, information indicating restarting, and does not send, to the second node, the information indicating restarting. Because the second node fails to receive a restart command sent by the controller node, normal operator execution can be maintained and is not affected.

In an existing implementation, the controller node needs to control all nodes to perform restarting and obtain status data. In this embodiment of this application, after determining an operator that needs to be scaled, the controller node may control only a node executing the operator (and an adjacent node of the node executing the operator) to perform restarting and configuration, and another node except for the node executing the operator (and the adjacent node of the node executing the operator) may maintain normal operator execution, and does not need to perform restarting or obtain status data. This reduces impact of operator scaling on operating of a system node, and further reduces a delay of an entire task procedure.

It should be understood that the first configuration information may be delivered by the controller node to the first node at a time in one control instruction, or may be delivered in a plurality of control instructions. For example, the first information and second information (and third information described consequently) may be carried in different control instructions and separately delivered to the first node.

In a possible implementation, the first configuration information further includes second information, and the second information indicates the first node to obtain, from a storage location corresponding to a checkpoint (checkpoint), historical status data generated when an operator is executed.

During configuration (including restarting) of the node executing operator scaling, some computed status data has been generated and sent to a node of a to-be-adjusted operator. However, a status of these operators has changed due to adjustment of a degree of parallelism. Consequently, corresponding information cannot be found in the status data, and an error occurs, resulting in a data loss. In this application, for a node that needs to perform restarting, backup historical status data may be obtained from the checkpoint. This ensures that data is not lost.

In a possible implementation,
an operator executed by the second node does not need to be scaled out or scaled in; or
an operator executed by an adjacent node of the second node does not need to be scaled out or scaled in.

In a possible implementation, if the first node is a node that is closest to a source node and that is in a plurality of nodes in which a relationship of data transmission between nodes is affected due to operator scaling (or the first node is the source node), the first node needs to actively obtain input data, where the input data is a 1^{st} computation result obtained by an adjacent upstream node after a last checkpoint (if the first node is the source node, a 1^{st} piece of to-be-processed service data after the checkpoint needs to be obtained), and an operation corresponding to an operator is performed based on the obtained input data (and status data). The obtained computation result may be transferred to an adjacent downstream node.

For a service node, the service node cannot actively determine whether the service node is a node that is closest to the source node and that is in the plurality of nodes in which the relationship of data transmission between the nodes is affected due to operator scaling, and this information may be determined by the controller node. Therefore, the controller node needs to send indication information to the node that is closest to the source node and that is in the plurality of nodes in which the relationship of data transmission between the nodes is affected due to operator scaling, for example, the first node is a node that is closest to the source node and that is in the plurality of nodes in which the relationship of data transmission between the nodes is affected due to operator scaling. The first configuration information sent by the controller node to the first node may further include third information, the third information indicates the first node to obtain input data from storage space after performing restarting, and the input data is a 1^{st} execution result obtained by executing an operator by the second node after the checkpoint. Alternatively, the first configuration information may further include third information, the third information indicates the first node to obtain input data from storage space after performing restarting, and the input data is a 1^{st} piece of to-be-processed service data after the checkpoint.

For example, the third information may be an identifier, and the identifier may indicate that, the first node is the node that is closest to the source node and that is in the plurality of nodes in which the relationship of data transmission between the nodes is affected due to operator scaling.

In an existing implementation, all the nodes need to perform restarting when operator scaling is performed, in other words, all source nodes perform restarting. Because the source node is an input side of service data, during restarting, an input of the service data is blocked, and the service data is not stored for a long time. As a result, a timeout may occur, resulting in a data loss and an inaccurate computation result. In this embodiment of this application, when the source node is not a node (for example, the second node) in which a relationship of data transmission between nodes is affected due to operator scaling, the source node does not need to perform restarting. This can ensure that the input of the service data is not blocked, and no data loss is caused due to a timeout.

In this embodiment of this application, during operator scaling, only a part of nodes perform restarting. For the node that performs restarting, historically completed operator computing (for example, an operator operation completed after an adjacent last checkpoint) may need to be repeatedly performed, and this computation result is transferred to a downstream node. If the downstream node does not perform restarting, historically received input data is received. After the downstream node historically completes operator execution of the input data, if the downstream node executes an operator operation once again based on repeatedly input data, a waste of computing resources is caused.

For a node, each piece of input data has a unique correspondence with service data, to resolve the foregoing problem. In this embodiment of this application, information indicating service data is carried in input data of a node, to indicate uniqueness of each piece of input data. Specifically, after completing operator execution based on service data, the source node may include the information indicating the service data in a computation result and transfer the computation result to a downstream node. After completing an operator operation, of input data, corresponding to the service data, each subsequent node may include the information indicating the service data in a computation result and transfer the computation result to a downstream node. In addition, each node may also maintain one piece of information indicating service data corresponding to a completed and latest performed operator operation, and determine, by comparing information that indicates service data and that is carried in input data with the information maintained by the node, whether to perform an operator operation based on the input data. If the information maintained by the node indicates that an operation of the input data has been completed, no operator operation is performed on the input data. If the information maintained by the node indicates that an operation of the input data has not been completed, an operator operation may be performed on the input data, and the information maintained by the node is updated, so that updated information indicates latest service data. In the foregoing manner, it can be ensured that a node that does not perform restarting does not repeatedly perform an operator operation. This reduces computing power overheads.

For example, the second node is an adjacent downstream node of the first node. After performing restarting, the first node may execute a first operator based on input first data, to obtain second data; and transfer the second data and first indication information to the second node, where the first indication information indicates service data corresponding to the first data. The second node is further configured to: obtain second indication information maintained by the second node, where the second indication information indicates service data corresponding to input data latest processed by the second node; and when it is determined, based on the first indication information and the second indication information, that the second data has not been executed, execute a second operator based on the second data. When it is determined, based on the first indication information and the second indication information, that the second data has been executed, a second operator may not be executed based on the second data.

In a possible implementation, the first indication information includes an identifier number of the service data corresponding to the first data.

In a possible implementation, when executing the second operator based on the second data, the second node may further change the second indication information to third indication information, where the third indication information indicates service data corresponding to the second data.

According to a second aspect, this application provides a system, including a controller node, where the controller node is connected to a plurality of nodes, each of the nodes is configured to execute a part of operators in an algorithm, the plurality of nodes implement stream computing of the algorithm through data transmission, and the plurality of nodes include a first node and a second node;
the controller node is configured to send first configuration information to the first node, where the first configuration information includes first information, the first information indicates the first node to perform restarting, and an operator executed by the first node needs to be scaled out or scaled in, or an operator executed by an adjacent node of the first node needs to be scaled out or scaled in; and
when the first node performs restarting based on the first configuration information, the second node is configured to maintain execution of an operator task.

In an existing implementation, the controller node needs to control all nodes to perform restarting and obtain status data. In this embodiment of this application, after determining an operator that needs to be scaled, the controller node may control only a node executing the operator (and an adjacent node of the node executing the operator) to perform restarting and configuration, and another node except for the node executing the operator (and the adjacent node of the node executing the operator) may maintain normal operator execution, and does not need to perform restarting or obtain status data. This reduces impact of operator scaling on operating of a system node, and further reduces a delay of an entire task procedure.

It can be learned that the second aspect corresponds to the first aspect. In addition to behavior of the controller node, that a plurality of nouns in the second aspect correspond to the nouns in the first aspect is further described from a perspective of the second node. Descriptions of technical effect are also applicable to the second aspect if being provided in the first aspect. Details are not described again.

In a possible implementation, the first node is further configured to: after performing restarting, execute a first operator based on input first data, to obtain second data; and
transfer the second data and second indication information to the second node, where the second indication information indicates service data corresponding to the first data.

The second node is further configured to: obtain third indication information, where the third indication information indicates service data corresponding to input data latest processed by the second node; and
when it is determined, based on the first indication information and the second indication information, that the second data has not been executed, execute a second operator based on the second data.

In a possible implementation, the second indication information includes an identifier number of the service data corresponding to the first data.

In a possible implementation, the second node is further configured to:
change the third indication information to fourth indication information, where the fourth indication information indicates service data corresponding to the second data.

In a possible implementation, the first indication information further includes third information, and the third information indicates the first node to obtain the first data from storage space after performing restarting; and
the first data is a 1^{st} execution result obtained by executing an operator by an upstream node of the first node after a checkpoint, or the first data is a 1^{st} piece of to-be-processed service data after a checkpoint.

According to a third aspect, this application provides a node configuration apparatus. The apparatus is located on a controller node, the controller node is connected to a plurality of nodes, each of the nodes is configured to execute a part of operators in an algorithm, the plurality of nodes implement stream computing of the algorithm through data transmission, and the plurality of nodes include a first node and a second node. The apparatus includes:
a configuration module, configured to determine first configuration information, where the first configuration information includes first information, the first information indicates the first node to perform restarting, and an operator executed by the first node needs to be scaled out or scaled in, or an operator executed by an adjacent node of the first node needs to be scaled out or scaled in; and
a sending module, configured to send the configuration information to the first node when the second node maintains execution of an operator task.

In a possible implementation, the first configuration information further includes second information, and the second information indicates the first node to obtain, from a storage location corresponding to a checkpoint (checkpoint), historical status data generated when an operator is executed.

In a possible implementation,
an operator executed by the second node does not need to be scaled out or scaled in; or
an operator executed by an adjacent node of the second node does not need to be scaled out or scaled in.

In a possible implementation, the second node is an adjacent upstream node of the first node, the first configuration information further includes third information, the third information indicates the first node to obtain input data from storage space after performing restarting, and the input data is a 1^{st} execution result obtained by executing an operator by the second node after the checkpoint.

In a possible implementation,
the first node is a source node in the plurality of nodes, the first configuration information further includes third information, the third information indicates the first node to obtain input data from storage space after performing restarting, and the input data is a 1^{st} piece of to-be-processed service data after the checkpoint.

In a possible implementation, the second node is a source node in the plurality of nodes.

According to a fourth aspect, an embodiment of this application provides a node configuration device. The device includes a storage medium and a processing circuit, the storage medium is coupled to the processing circuit, the storage medium is configured to store computer program code, the computer program code includes computer instructions, and when the computer instructions are executed by the processing circuit, the node configuration method according to the first aspect is performed.

The apparatus in the fourth aspect corresponds to the method in the first aspect, and the apparatus has a function of implementing the node configuration method in any implementation of the first aspect. A plurality of nouns in the fourth aspect correspond to the nouns in the first aspect, and are also associated with the system in the second aspect. Therefore, descriptions of various words or sentences, descriptions of various implementations, and descriptions of technical effect in the first aspect and the second aspect are also applicable to the fourth aspect if being provided in the fourth aspect. Details are not described again.

The following fifth aspect to ninth aspect correspond to the first aspect and the second aspect. Descriptions of various words or sentences, descriptions of various implementations, and descriptions of technical effect in the first aspect and the second aspect are also applicable to the following aspects if being provided in the following aspects. Details are not described again.

According to a fifth aspect, a communication apparatus is provided, including a processor, where the processor is configured to: be coupled to a memory, and after reading instructions in the memory, perform the node configuration method according to any one of the foregoing aspects based on the instructions.

According to a sixth aspect, an embodiment of this application provides a communication apparatus. The apparatus may be a chip system. The chip system includes a processor, and may further include a memory, to implement a function of the method described in any one of the foregoing aspects. The chip system may include a chip, or may include a chip and another discrete device.

According to a seventh aspect, a communication apparatus is provided. The apparatus may be a circuit system, the circuit system includes a processing circuit, and the processing circuit is configured to perform the method according to any one of the foregoing aspects.

According to an eighth aspect, an embodiment of this application further provides a computer-readable storage medium, including instructions. When the instructions are run on a computer, the computer is enabled to perform the method according to any one of the foregoing aspects.

According to a ninth aspect, an embodiment of this application further provides a computer program product, including instructions. When the instructions are run on a computer, the computer is enabled to perform the method according to any one of the foregoing aspects.

### BRIEF DESCRIPTION OF DRAWINGS

FIG. 1 is a diagram of an architecture according to this application;
FIG. 2 is a diagram of an architecture according to this application;
FIG. 3 is a diagram of an operator before being scaled out according to this application;
FIG. 4 is a diagram of an operator after being scaled out according to this application;
FIG. 5 is a schematic flowchart of stateful stream computing according to this application;
FIG. 6 is a schematic flowchart of stateless stream computing according to this application;
FIG. 7 is a diagram of an operator before being scaled in according to this application;
FIG. 8 is a diagram of an operator after being scaled in according to this application;
FIG. 9 is a schematic flowchart of a node configuration method according to this application;
FIG. 10 is a diagram of a node configuration apparatus according to this application; and
FIG. 11 is a diagram of a node configuration apparatus according to this application.

### DESCRIPTION OF EMBODIMENTS

First, some expressions that may appear in this application are described.

"First", "second", and the like are intended to distinguish between different objects or distinguish between different processing on a same object, but do not indicate a particular order of the objects.

"At least one" means one or more, and "a plurality of" means two or more.

The term "and/or" describes an association relationship between associated objects and indicates that three relationships may exist. For example, A and/or B may indicate the following cases: Only A exists, both A and B exist, and only B exists. A and B may be singular or plural.

The character "/" generally indicates an "or" relationship between the associated objects. For example, A/B may indicate A or B.

In addition, the terms "including", "containing", and "having" in the descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that in this application, the word such as "example" or "for example" is used to represent giving an example or descriptions. Any implementation (for example, an embodiment of this application) or design solution described as an "example" or "for example" should not be explained as being more preferred or having more advantages than another implementation or design solution. Exactly, use of the word "example", "for example", or the like is intended to present a related concept in a specific manner.

In the specification and the accompanying drawings of this application, "of (English: of)", "relevant (English: relevant)", and "corresponding (English: corresponding)" may be used interchangeably sometimes. It should be noted that when a difference between "of", "relevant", and "corresponding" is not emphasized, meanings expressed by "of", "relevant", and "corresponding" are consistent.

The following briefly describes some terms in this application.

Node: The node is a device having at least one of two functions: data processing and data storage. An operating system runs on the node, and the node may be distinguished by using the operating system. That is, different operating systems run on different nodes. In other words, hardware and software that are used for running an operating system may be considered as belonging to a same node. In this application, the node may be a complete physical machine, for example, a terminal or a network device, for example, a server or a server agent. The node may alternatively be a device in a physical machine, for example, a processor, a memory, and a storage. When a physical machine includes two nodes, different operating systems run on the two nodes. For example, if the physical machine includes a central processing unit (Central Processing Unit, CPU) in which an operating system 1 runs and a graphics processing unit (Graphics Processing Unit) in which an operating system 2 runs, it may be considered that the central processing unit and the graphics processing unit belong to different nodes. When the node is the device, the node is an individual entity in terms of hardware. The "individual entity" may be understood as a circuit or module having a dedicated function, and the device is encapsulated or assembled on the physical machine. Data access in this application may be understood as that a node accesses, by using an instance, data maintained by another node. The physical machine is a computer packaged into a product, for example, a server, a desktop computer, an all-in-one (All-In-One PC, AIO) PC, a notebook computer, or a smartphone.

In this application, the node may be a software module in the physical machine, for example, may be one or more cores, or may be a part of computing resources. The computing resource may be an instance, and the instance is a software module that can run an application or a system program. In addition, the software module can be referred to as an instance only when run by an operating system. Otherwise, the software module is merely a segment of code. The instance may be expressed in a plurality of forms. For example, a process, a thread, a container, or a function may be understood as one instance.

Terminal: The terminal may include a desktop device, a laptop device, a handheld device, or a vehicle-mounted user equipment (User Equipment, UE) device, for example, a smartphone, a cellular phone, a desktop computer, a tablet computer, a smart television, a smart television box, an ultra-mobile personal computer (Ultra-mobile Personal Computer, UMPC), a netbook computer, a personal digital assistant (Personal Digital Assistant, PDA), a portable multimedia player (Portable Multimedia Player, PMP), a dedicated media player, a consumer communication device, a wearable device (for example, a smartwatch), an AR (augmented reality)/VR (virtual reality) device, and other types of communication devices.

Identifier: The identifier is used to distinguish one type of object or one object from other objects of a same type or different types, for example, an identifier of a node, an identifier of a network, and an identifier of a network interface card. The identifier may be a name or a number, or a distinguishing feature may be used as the identifier, for example, a type is used as the identifier. Implementation of various identifiers is not limited in this application, provided that the identifiers can be distinguished.

Storage space: The storage space may also be referred to as address space, and is one or more segments of addresses that can be used by a device or an instance. For example, virtual address space of a device or an instance can be used by the device or the instance, and is one or more segments of virtual addresses that belong to the device or the instance. The virtual address space of the device or the instance is allocated by an operating system in which the device or the instance is located. For another example, physical address space of a device or an instance is one or more segments of physical addresses allocated to the device or the instance for use. When the device or the instance uses the physical address space, another device or instance cannot use an address in the physical address space. The physical address space of the instance is allocated by an operating system that runs the instance. The allocation may be dynamic. For example, as the instance runs, increasingly large physical address space is occupied, but there is an upper limit. The physical address space of the device usually has a fixed size and range.

Stream computing: Stream computing is also referred to as streaming computing, and is a consecutive, low-delay, and event-triggered computing job. Stream computing may be implemented by a node system. The node system may include a plurality of service nodes responsible for operator execution and a controller node at a control side. An algorithm may be deployed on the plurality of service nodes for execution. Each service node may be responsible for executing a part of operators in the algorithm. After completing execution, the service node may transfer an execution result of the operator to an adjacent downstream node. Streaming computing generally includes a data input (data source), (one or more) processing operators, and a data output. There may be one or more data sources and data outputs.

Operator scale-out and scale-in: Operator scale-out and scale-in can be referred to as a degree of parallelism of an operator. Some operators may be executed by a plurality of nodes that are executed in parallel, and each node processes a subset of input data. A quantity of parallel nodes of an operator may be referred to as a degree of parallelism of the operator. For example, input data A may include input data A1 and input data A2, and the input data A is used as an input of an operator A. If the operator A is deployed only on a node 1, and all the input data A is input to the node 1, a degree of parallelism of the operator A is 1. If the operator A is deployed on a node 1 and a node 2, the input data A1 is input to the node 1, and the input data A2 is input to the node 2, a degree of parallelism of the operator A is 2.

For a stream computing task, there is a change in task traffic in different time periods. For example, the task is to collect statistics on transportation capacity in a city every day, and transportation capacity in a peak time period in the morning or evening of a day is significantly higher than that in another time period, so that stream data in the peak time period in the morning or evening is higher than that in the another time period. In this case, because the task traffic changes in real time, an initially allocated resource is always used for task computing. When the task traffic is small, only a part of resources are required for execution, resulting in a waste of resources. When the task traffic is large, even if all allocated resources are used for task execution, load pressure is high and a throughput capability is reduced. In view of this, for the stream computing task, resources need to be adjusted based on real-time traffic (or another factor) to match current task traffic. In a current resource adjustment manner, in a process of executing a stream computing task, when task traffic changes, corresponding operator scaling is required, in other words, a degree of parallelism of an operator is adjusted.

For example, if the operator A is deployed only on the node 1, all the input data A is input to the node 1. In this case, the degree of parallelism of the operator A is 1. When a load amount of the node is excessively large, the degree of parallelism of the operator A needs to be adjusted to 2, in other words, the operator A is scaled out. Specifically, a part of data (input data A2) originally executed by the node 1 is transferred to another node (for example, the node 2) for execution. A scaled-out operator A is deployed on the node 1 and the node 2, the input data A1 is input to the node 1, and the input data A2 is input to the node 2.

For example, if the operator A is deployed on the node 1 and the node 2, the input data A1 in the input data A is input to the node 1, and the input data A2 in the input data A is input to the node 2. In this case, the degree of parallelism of the operator A is 2. When a load amount of the node is excessively small, the degree of parallelism of the operator A needs to be adjusted to 1, in other words, the operator A is scaled in. Specifically, data (input data A2) originally executed by the node 2 is transferred to the node 1 for execution. A scaled-in operator A is deployed on the node 1, and the input data A1 and the input data A2 are input to the node 1.

Status data: The status data is historical data obtained when a node in stream computing executes an operation corresponding to an operator. In some scenarios, the status data is stored in preconfigured storage space and is used during subsequent operator execution.

Stateless computing: In stream computing, when executing an operator, a node only needs to process current input data to compute a correct result.

Stateful computing: Stateful computing corresponds to stateless computing. In stream computing, a node needs to perform related operations on historical status data when executing an operator, to compute a correct result (for example, accumulation).

Checkpoint: The checkpoint is referred to as a checkpoint, and is a global operation from triggering of a source node (source) of stream computing to completion of all downstream operators. A real-time task of the downstream operator is to periodically backup a status persistently. A checkpoint mechanism is derived from a distributed snapshot algorithm (Chandy-Lamport algorithm). The distributed snapshot algorithm simplifies a distributed system into a directed graph, which includes a limited quantity of processes and channels (channels) between processes, where nodes are the processes, and edges are the channels. A global status of the distributed system includes the processes and information in the channels, and the processes and the information need to be stored in the distributed snapshot algorithm.

A feature of streaming processing is to process consecutive data. Generally, streaming processing keeps running unless a user actively stops it. A machine fault, a network problem, an external storage problem, or the like may occur in a running process. A real-time task needs to have an automatic fault tolerance and recovery function, to ensure that the real-time task can always run stably. The checkpoint is a fault tolerance and recovery mechanism. This mechanism ensures that a real-time program can recover automatically even when an exception occurs or a machine fault occurs during running. The checkpoint can reduce a fault tolerance and recovery time because a status is recovered each time from a latest checkpoint location instead of a program start status.

Barrier: The barrier is referred to as a barrier or a data fence (which may be understood as a boundary for persistent storage of a checkpoint status), is a special internal message generated by a stream computing framework, is used as a part of a data stream, and flows to a downstream operator without affecting a normal data stream.

In a distributed checkpoint, a barrier is an important concept of the checkpoint, and is referred to as a barrier or a data fence. The barrier is a special internal message. When a checkpoint is performed, barriers are periodically injected at a data stream source. These barriers are used a part of a data stream and flow to a downstream operator without affecting a normal data stream.

For a stream computing task, there is a change in task traffic in different time periods. For example, the task is to collect statistics on transportation capacity in a city every day, and transportation capacity in a peak time period in the morning or evening of a day is significantly higher than that in another time period, so that stream data in the peak time period in the morning or evening is higher than that in the another time period. In this case, because the task traffic changes in real time, an initially allocated resource is always used for task computing. When the task traffic is small, only a part of resources are required for execution, resulting in a waste of resources. When the task traffic is large, even if all allocated resources are used for task execution, load pressure is high and a throughput capability is reduced. In view of this, for the stream computing task, resources need to be adjusted based on real-time traffic to match current task traffic.

In a current resource adjustment manner, in a process of executing a stream computing task, when task traffic changes, corresponding operator scaling is required. In this case, the controller node may trigger a checkpoint once, reallocate a resource such as a concurrent operator based on current task traffic, and control all nodes to perform restarting (in a restarting process, all the nodes stop an operator execution task), so that all the nodes continue to execute the operators. However, in this resource adjustment manner, resource adjustment can be performed only after an entire task is stopped. Further, stopping of the entire task results in large impact, and all the nodes of the task are affected. In addition, throughput and stability of the task are affected.

This application provides a node configuration method, to resolve the foregoing problems.

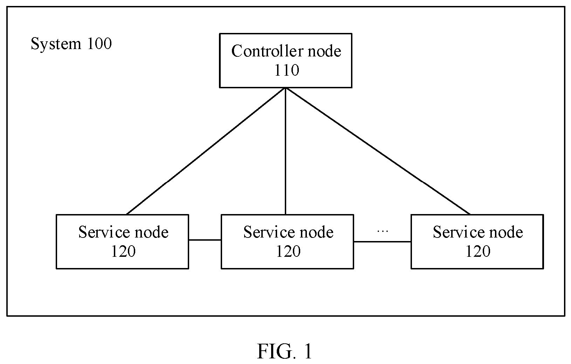

FIG. 1 is a diagram of an application architecture according to this application.

FIG. 1 shows an example of a system 100 according to an embodiment of this application. As shown in FIG. 1, the system 100 may include at least one controller node 110 and a plurality of service nodes 120 (the service node may be briefly referred to as a node in this embodiment of this application), and the controller node 110 is communicatively connected to each service node 120. The controller node 110 may be configured to coordinate and manage running of each service node 120, for example, allocate a resource such as an operator node to a task, manage a checkpoint, and control a data transmission path of a task between the service nodes. When the system 100 includes one controller node 110, the controller node 110 performs the foregoing operations in the system 110. When the system 100 includes a plurality of controller nodes 110, one controller node 110 in the plurality of controller nodes 110 is used as an active controller node and is configured to perform the foregoing operations in the system 110, and other controller nodes 110 are used as standby controller nodes. The service node 120 may be a worker node configured to execute a task (for example, an operator execution task). The service nodes 120 may implement a stream computing task through data transmission.

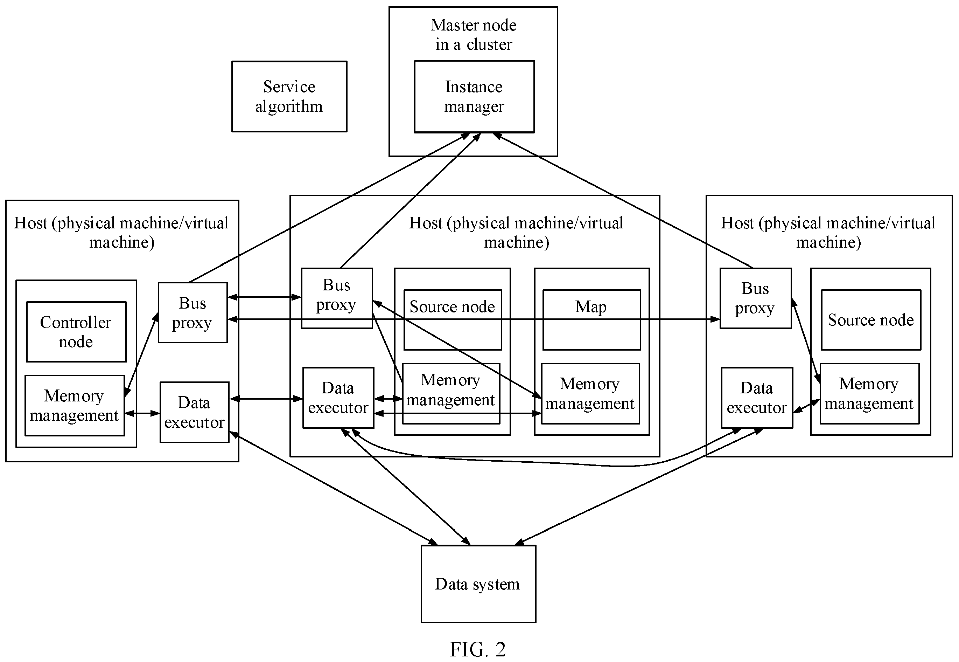

FIG. 2 is a diagram of an application architecture according to this application.

For a stream pattern SDK in a service algorithm, a user can compile a stream application by using the provided stream pattern SDK. A controller node coordinator is responsible for constructing a schedulable and executable graph graph for the user stream application, and manages and controls a state machine of each computing function in the user stream application, and manages a checkpoint checkpoint of the stream application. An executor Executor: is an executor of a function of the user stream application, and is responsible for executing a checkpoint and restarting the user function. A data system master is a management plane that is responsible for distributed reading and writing of a function. A data worker is responsible for controlling distributed reading and writing of the function.

The following describes a system in embodiments of this application with reference to accompanying drawings.

In a possible implementation, one system provided in embodiments of this application may include a controller node. The controller node is connected to a plurality of nodes (or may be referred to as service nodes), each node is configured to execute a part of operators in an algorithm, and the plurality of nodes implement stream computing of the algorithm through data transmission.

In a possible implementation, the controller node (coordinator) may detect (for example, may periodically detect) a back pressure value of an operator. The back pressure value may also be referred to as a load degree. When the back pressure value is greater than or less than a specified threshold, a degree of parallelism of execution of the operator may be adjusted.

The following first describes an example about how to detect the back pressure value of the operator.

In a possible implementation, the back pressure value may be represented by a buffer usage ratio of a node. For example, when the buffer usage ratio ranges from 0 to 0.1, it may be considered that the back pressure value is excessively low; when the buffer usage ratio ranges from 0.1 to 0.5, it may be considered that the back pressure value is normal; or when the buffer usage ratio ranges from 0.5 to 1, it may be considered that the back pressure value is excessively high.

When the controller node determines that the back pressure value of the operator is excessively low, a related node may be triggered to perform operator scale-in. When the controller node determines that the back pressure value of the operator is excessively high, a related node may be triggered to perform operator scale-out.

In embodiments of this application, the controller node may determine that an operator executed by a first node in the plurality of nodes needs to be scaled or an upstream node or a downstream node of the first node in the plurality of nodes needs to be scaled.

The following describes how the controller node determines that operators executed by which nodes in the plurality of nodes need to be scaled.

In a possible implementation, the controller node may determine, according to a scaling algorithm, a to-be-scaled-in operator and a quantity of to-be-scaled-in operators. For example, the controller node may collect a buffer idle ratio of the data system on each node once at an interval of a specific time (for example, one minute), mark each operator as OK/HIGH/LOW based on threshold division, then sort, based on a buffer usage ratio, operators marked as LOW, and determine that an operator B needs to be scaled in, where based on a ratio a of a maximum value (namely, 0.5) of an OK threshold to a current buffer usage ratio, quantity of required operators=quantity of degrees of parallelism of the operator B/a, and quantity of to-be-scaled-in operators=current quantity of operators-quantity of required operators.

In a possible implementation, after determining the operator that needs to be scaled, the controller node may update status partitioning, a relationship of data transmission between nodes, and a partitioning strategy of a node in which a relationship of data transmission between nodes is affected due to operator scaling.

The node in which the relationship of data transmission between the nodes is affected due to operator scaling may be a node executing operator scaling and an adjacent node of the node executing operator scaling. The adjacent node herein may be understood as a node that has a connection relationship. Two adjacent nodes may include an upstream node and a downstream node that are adjacent. During stream computing, a computation result of the upstream node is transferred to the downstream node, and the downstream node may perform, based on the computation result obtained by the upstream node, an operation corresponding to an operator.

The partitioning strategy may be a distribution mode of stream data in a running data stream, namely, a manner of distributing the stream data to a node at which a downstream operator is located. The status partitioning may be that a persistent state before restarting needs to be divided and reallocated based on a new degree of parallelism of the operator due to a change in a degree of parallelism of a stream operator. The data transmission relationship may be a data receiving/sending producer/consumer (producer/consumer) relationship between an operator and an upstream or downstream node.

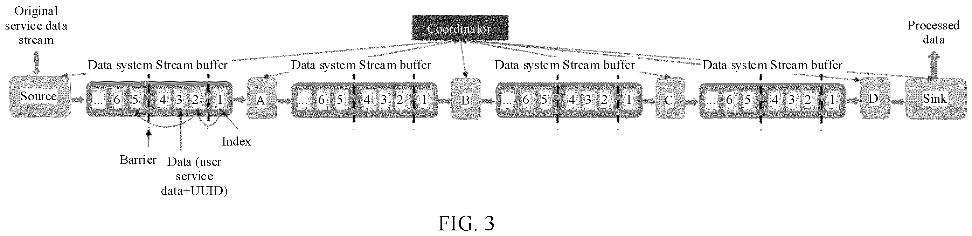

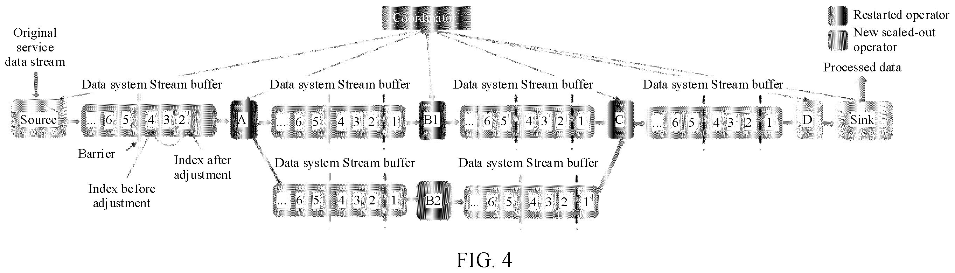

For example, refer to FIG. 3. In FIG. 3, an operator executed by a node B needs to be scaled out. Therefore, an adjacent upstream node of the node B and an adjacent downstream node of the node B are nodes in which a relationship of data transmission between nodes is affected due to operator scaling. Specifically, refer to FIG. 4. FIG. 4 shows a node system after scale-out. In this case, a degree of parallelism of an operator of a node B changes from 1 to 2, in other words, a node B1 and a node B2 jointly execute the operator executed by the original node B. In FIG. 3, a computation result obtained by a node A may be transferred to the node B. In a system after an operator is scaled out, a part of the computation result executed by the node A needs to be transferred to the node B1, and the other part needs to be transferred to the node B2, in other words, a relationship of data transmission between the node A and another node changes. Therefore, the relationship of data transmission between the node A and the another node needs to be reconfigured by the controller node. Similarly, in FIG. 3, a node C only needs to obtain a computation result from the node B. In the system after the operator is scaled out, the node C needs to obtain computation results from the node B1 and the node B2, in other words, a relationship of data transmission between the node C and another node changes. Therefore, the relationship of data transmission between the node C and the another node needs to be reconfigured by the controller node.

In addition, the node B1 and the node B2 need to obtain respectively, from status data of the original node B, status data required by the node B1 and the node B2.

In an existing implementation, the controller node needs to control all nodes to perform restarting and obtain status data. In this embodiment of this application, after determining an operator that needs to be scaled, the controller node may control only a node executing the operator (and an adjacent node of the node executing the operator) to perform restarting and configuration, and another node except for the node executing the operator (and the adjacent node of the node executing the operator) may maintain normal operator execution, and does not need to perform restarting or obtain status data. This reduces impact of operator scaling on operating of a system node, and further reduces a delay of an entire task procedure.

In a possible implementation, the controller node may determine first configuration information, where the first configuration information includes first information, the first information indicates the first node to perform restarting, and an operator executed by the first node needs to be scaled out or scaled in, or an operator executed by an adjacent node of the first node needs to be scaled out or scaled in.

In a possible implementation, the first configuration information may further include second information, and the second information indicates the first node to obtain, from a storage location corresponding to a checkpoint (checkpoint), historical status data generated when an operator is executed. For a node in which a relationship of data transmission between nodes is affected due to operator scaling, because status data is lost after restarting, the historical status data generated when the operator is executed needs to be obtained from the storage location corresponding to the checkpoint (checkpoint), to ensure that the status data is not lost during computation.

It should be understood that the first configuration information may be delivered by the controller node to the first node at a time in one control instruction, or may be delivered in a plurality of control instructions. For example, the first information and second information (and third information described consequently) may be carried in different control instructions and separately delivered to the first node.

In a possible implementation, when the second node maintains execution of the operator task, that is, when it is determined that the first node is a node executing operator scaling (or an adjacent node of the node executing operator scaling), and when it is determined that the second node is neither the node executing operator scaling nor the adjacent node of the node executing operator scaling, the controller node may send, to the first node, information indicating restarting, and does not send, to the second node, the information indicating restarting. Because the second node fails to receive a restart command sent by the controller node, normal operator execution can be maintained and is not affected.

In an existing implementation, all nodes need to perform restarting when operator scaling is performed, in other words, all source nodes perform restarting. Because the source node is an input side of service data, during restarting, an input of the service data is blocked, and the service data is not stored for a long time. As a result, a timeout may occur, resulting in a data loss and an inaccurate computation result. In this embodiment of this application, when the source node is not a node (for example, the second node) in which a relationship of data transmission between nodes is affected due to operator scaling, the source node does not need to perform restarting. This can ensure that the input of the service data is not blocked, and no data loss is caused due to a timeout.

In a possible implementation, after the first node performs restarting, because a computation result after a last checkpoint is lost, an operator operation after the last checkpoint needs to be performed again, to ensure integrity of the computation result.

In a possible implementation, if the first node is a node that is closest to a source node and that is in a plurality of nodes in which a relationship of data transmission between nodes is affected due to operator scaling (or the first node is the source node), the first node needs to actively obtain input data, where the input data is a 1^{st} computation result obtained by an adjacent upstream node after the last checkpoint (if the first node is the source node, a 1^{st} piece of to-be-processed service data after the checkpoint needs to be obtained), and an operation corresponding to an operator is performed based on the obtained input data (and status data). The obtained computation result may be transferred to an adjacent downstream node.

For example, in an upstream-to-downstream order, the node A, the node B, and the node C are nodes in which a relationship of data transmission between nodes is affected due to operator scaling, the node B is a node on which operator scaling is performed, the node A is an upstream node of the node B, and the node C is a downstream node of the node B. A node D and a node E are nodes in which a data transmission relationship is not affected due to operator scaling, the node D is an upstream node of the node A, and the node E is a downstream node of the node C. The controller node may control the node A, the node B, and the node C to perform restarting, and the node D and the node E perform normal operator execution. A computation result of the node D after the last checkpoint is data 1 and data 2. After performing restarting, the node A may obtain the data 1 (even if operator execution based on the data 1 is completed before restarting), and transfer a computation result to a downstream node.

For example, in an upstream-to-downstream order, the node A, the node B, and the node C are nodes in which a relationship of data transmission between nodes is affected due to operator scaling, the node B is a node on which operator scaling is performed, the node A is a source node and is an upstream node of the node B, and the node C is a downstream node of the node B. A node E is a node in which a data transmission relationship is not affected due to operator scaling, and the node E is a downstream node of the node C. The controller node may control the node A, the node B, and the node C to perform restarting, and a node D and the node E perform normal operator execution. Service data to be executed by the node A after the last checkpoint is service data 1 and service data 2. After performing restarting, the node A may obtain the service data 1 (even if operator execution based on the service data 1 is completed before restarting), and transfer a computation result to a downstream node.

For a service node, the service node cannot actively determine whether the service node is a node that is closest to the source node and that is in the plurality of nodes in which the relationship of data transmission between the nodes is affected due to operator scaling, and this information may be determined by the controller node. Therefore, the controller node needs to send indication information to the node that is closest to the source node and that is in the plurality of nodes in which the relationship of data transmission between the nodes is affected due to operator scaling, for example, the first node is a node that is closest to the source node and that is in the plurality of nodes in which the relationship of data transmission between the nodes is affected due to operator scaling. The first configuration information sent by the controller node to the first node may further include third information, the third information indicates the first node to obtain input data from storage space after performing restarting, and the input data is a 1^{st} execution result obtained by executing an operator by the second node after the checkpoint. Alternatively, the first configuration information may further include third information, the third information indicates the first node to obtain input data from storage space after performing restarting, and the input data is a 1^{st} piece of to-be-processed service data after the checkpoint.

For example, the third information may be an identifier, and the identifier may indicate that, the first node is the node that is closest to the source node and that is in the plurality of nodes in which the relationship of data transmission between the nodes is affected due to operator scaling.

In a possible implementation, when a control unit that is of a restarted operator and that receives data controls first data reading, a data read index in a data buffer may be updated to a start location. After the data is consumed, the index moves normally. This ensures that the stream data is not missed during computation.

In this embodiment of this application, during operator scaling, only a part of nodes perform restarting. For the node that performs restarting, historically completed operator computing (for example, an operator operation completed after an adjacent last checkpoint) may need to be repeatedly performed, and this computation result is transferred to a downstream node. If the downstream node does not perform restarting, historically received input data is received. After the downstream node historically completes operator execution of the input data, if the downstream node executes an operator operation once again based on repeatedly input data, a waste of computing resources is caused.

For example, in an upstream-to-downstream order, the node A, the node B, and the node C are nodes in which a relationship of data transmission between nodes is affected due to operator scaling, the node B is a node on which operator scaling is performed, the node A is an upstream node of the node B, the node C is a downstream node of the node B, the node E is a node in which a data transmission relationship is not affected due to operator scaling, and the node E is a downstream node of the node C. Before the node A, the node B, and the node C perform restarting, the node C obtains data 1 and data 2 in two operator operations performed after the checkpoint. The data 1 and the data 2 are transferred to the node E, and the node E completes an operator operation based on the data 1 and the data 2. Because the node A, the node B, and the node C perform restarting, the node C needs to perform operator operations again to obtain the data 1 and the data 2, and transfer the data 1 and the data 2 to the node E. The node E has completed the operator operation based on the data 1 and the data 2. In addition, the node E does not perform restarting. If the operator operation based on the data 1 and the data 2 is performed once again, a waste of computing resources is caused.

For a node, each piece of input data has a unique correspondence with service data, to resolve the foregoing problem. In this embodiment of this application, information indicating service data is carried in input data of a node, to indicate uniqueness of each piece of input data. Specifically, after completing operator execution based on service data, the source node may include the information indicating the service data in a computation result and transfer the computation result to a downstream node. After completing an operator operation, of input data, corresponding to the service data, each subsequent node may include the information indicating the service data in a computation result and transfer the computation result to a downstream node. In addition, each node may also maintain one piece of information indicating service data corresponding to a completed and latest performed operator operation, and determine, by comparing information that indicates service data and that is carried in input data with the information maintained by the node, whether to perform an operator operation based on the input data. If the information maintained by the node indicates that an operation of the input data has been completed, no operator operation is performed on the input data. If the information maintained by the node indicates that an operation of the input data has not been completed, an operator operation may be performed on the input data, and the information maintained by the node is updated, so that updated information indicates latest service data. In the foregoing manner, it can be ensured that a node that does not perform restarting does not repeatedly perform an operator operation. This reduces computing power overheads.

For example, the second node is an adjacent downstream node of the first node. After performing restarting, the first node may execute a first operator based on input first data, to obtain second data; and transfer the second data and first indication information to the second node, where the first indication information indicates service data corresponding to the first data. The second node is further configured to: obtain second indication information maintained by the second node, where the second indication information indicates service data corresponding to input data latest processed by the second node; and when it is determined, based on the first indication information and the second indication information, that the second data has not been executed, execute a second operator based on the second data. When it is determined, based on the first indication information and the second indication information, that the second data has been executed, a second operator may not be executed based on the second data.

In a possible implementation, the first indication information includes an identifier number of the service data corresponding to the first data.

In a possible implementation, when executing the second operator based on the second data, the second node may further change the second indication information to third indication information, where the third indication information indicates service data corresponding to the second data.

For example, the foregoing identifier may be a UUID. An executor of each operator may maintain a UUID list inside, and is used to buffer UUID information of data that has been processed between two adjacent barriers. The UUID information is used to determine whether data sent by an upstream is duplicate data. If the data is the duplicate data, the data is discarded and is not processed; or if the data is not the duplicate data, the data is processed normally. This ensures that the stream data is not repeatedly computed.

The following describes an example of stream computing in embodiments of this application with reference to a specific example.

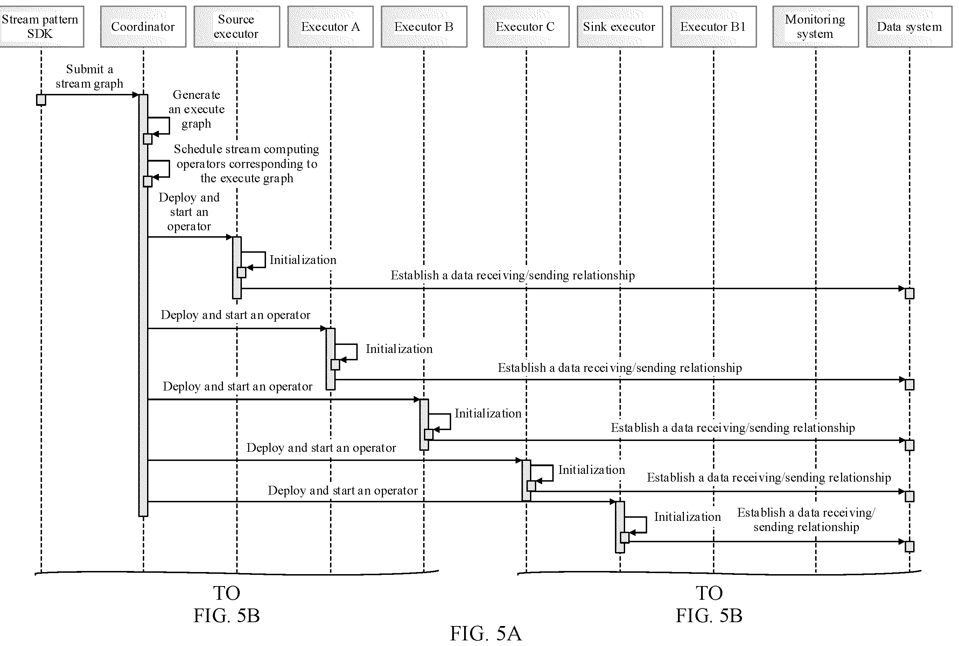

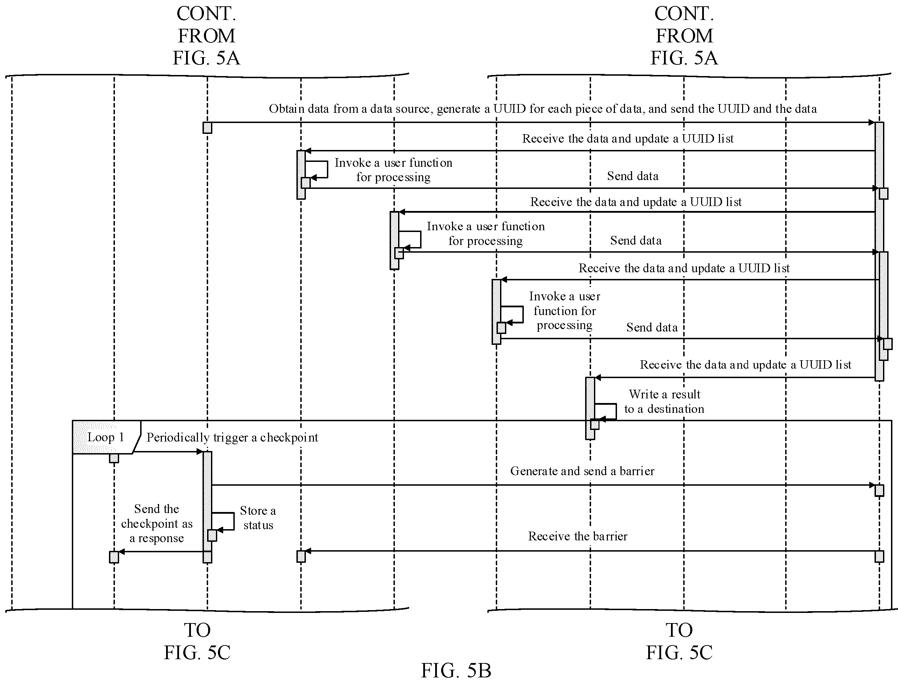

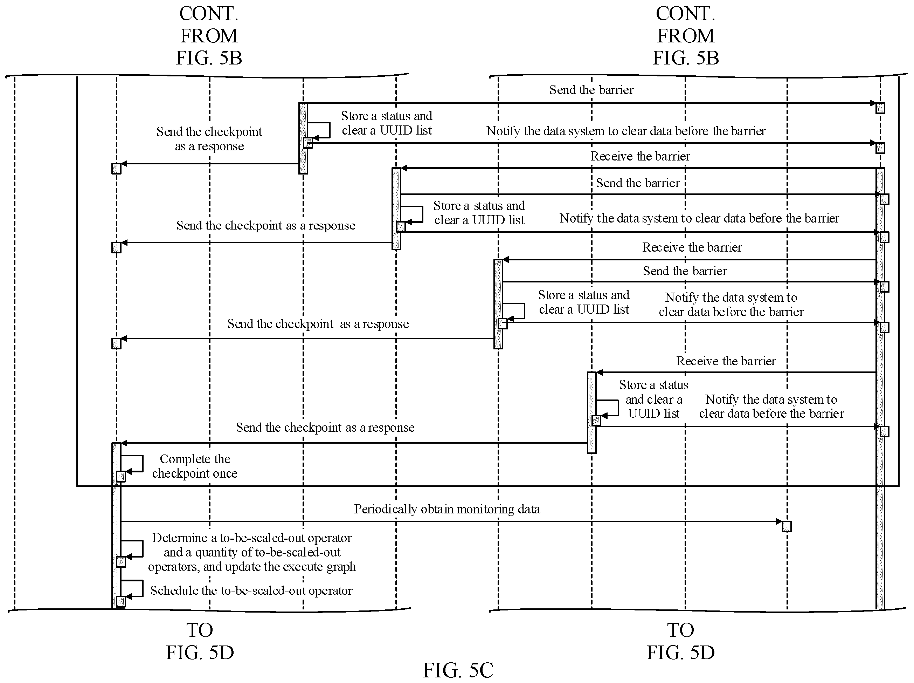

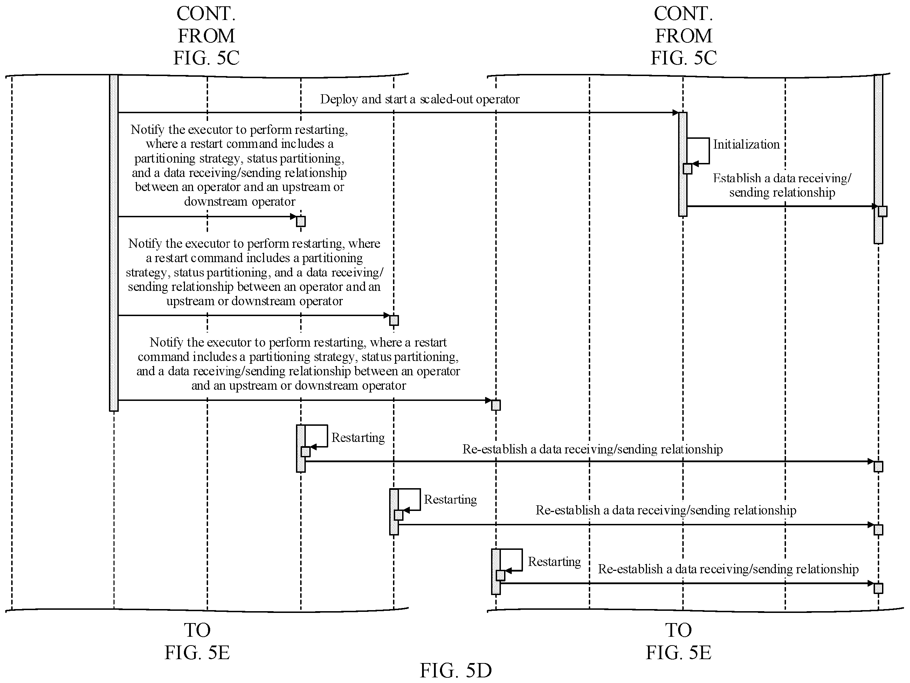

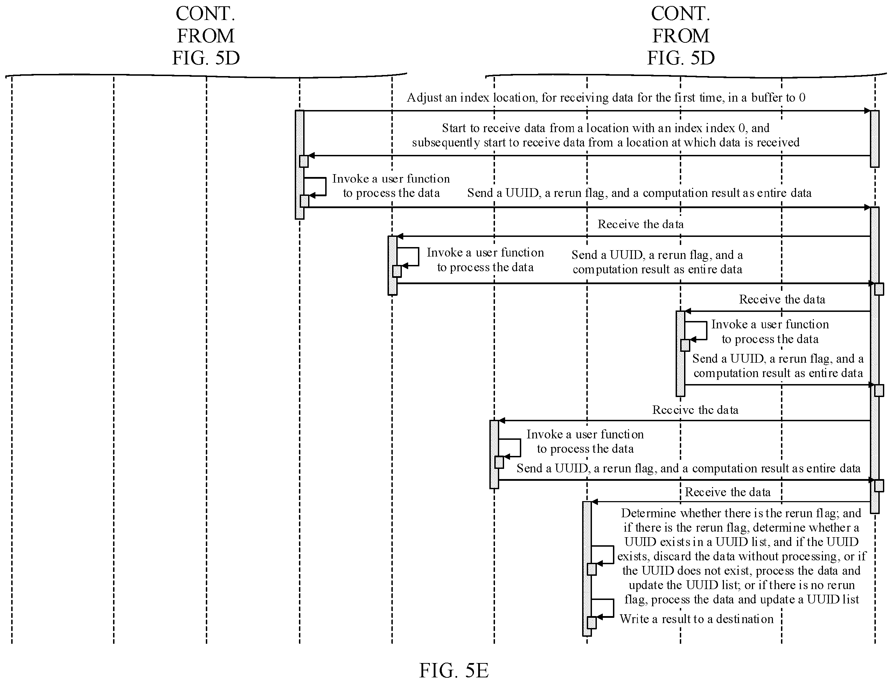

FIG. 5 is a schematic flowchart of stateful stream computing. It should be understood that a node at which an operator is located in embodiments may be briefly referred to as an operator. For example, a source node may be referred to as a source operator.

The controller node (coordinator) may generate an execute graph (execute graph) based on a stream application compiled by a user, schedule each operator in the execute graph, and deploy and start the operator based on a scheduling result. For stateful computing, a stream application user uses a stream pattern SDK API to configure checkpoint -related parameters, such as a checkpoint detection interval and a checkpoint timeout period. An executor of the source operator invokes a source operator function of the user to read data from a data source. The executor of the source operator generates a UUID for each piece of service data, and the executor transfers the UUID and the service data to a downstream operator. Data is transferred through a data plane of a data system.

An executor of a non-source operator receives, from the data plane of the data system, data sent by an upstream operator, extracts user data, invokes a user function (namely, an operator) to perform computation, updates, after the computation is completed, a UUID list maintained in a memory of the executor, and then transfers a computation result and a UUID of the data to a downstream operator.

An executor of a sink operator receives, from the data plane of the data system, data sent by an upstream operator, extracts user data, and invokes a user function to write the data to an output system.

The coordinator starts a checkpoint, stores a status, and starts to dynamically adjust a degree of parallelism of an operator. The coordinator periodically sends a checkpoint start message to the executor of the source operator based on checkpoint information configured by the user. The start message can carry a checkpoint ID.

The executor of the source operator receives the checkpoint start message, constructs a piece of data of a barrier type, sends the data to the data plane of the data system of all connected downstream operators in a broadcast manner, then stores a status of the operator, and sends a checkpoint completion condition as a response to the coordinator.

If the executor of the non-source operator receives the service data sent by the upstream, the executor stores UUID information carried in the data to the UUID list, invokes the user function to perform computation, and then sends a computation result and the UUID to the data plane of the data system. The data system sends the computation result and the UUID to the downstream operator. If a barrier is received, the barrier is first broadcast, through the data plane of the data system, to all downstream operators connected to the operator, then the status of the operator is stored, the checkpoint completion condition as the response is sent to the coordinator, current information in the UUID list is cleared, and finally the data system is notified that the barrier and previous data information can be cleared.

If the executor of the sink operator receives the service data sent by the upstream, the executor stores UUID information carried in the data to a UUID list, and then invokes the user function to write the data to an output specified by the user. If the barrier is received, a status of the operator is first stored, a checkpoint completion condition as a response is sent to the coordinator, current information in the UUID list is cleared, and then the data system is notified that the barrier and previous data information can be cleared.

In this way, one complete checkpoint is completed. The coordinator changes the checkpoint from a pending state to a completed state.

When the coordinator detects, by using a detection system, that data is stacked or a data amount decreases in a service stream operator, and that a back pressure value exceeds a threshold or is lower than the threshold, an operator scaling operation is triggered (the following procedure uses a degree of parallelism of a scaled-out operator as an example, and a degree of parallelism of a scaled-in operator is similar to that of the scaled-out operator). The coordinator determines a to-be-scaled-out operator, then determines an upstream or downstream operator connected to the operator, and updates, to the execute graph, a data partitioning mode, a degree of parallelism of the operator, and a data receiving/sending producer/consumer relationship between the operator and the upstream or downstream operator. The coordinator schedules, deploys, and starts an executor of a new scaled-out operator. After the executor of the new scaled-out operator is successfully started, the coordinator notifies an executor of the original to-be-scaled-out operator, and an executor that is of an upstream or downstream operator and that is connected to the executor of the operator to perform restarting. A restart command may include a new partitioning mode, information about a data connection between each operator and upstream and downstream operators, corresponding status storage information, in a checkpoint, that needs to be recovered by an operator, a to-be-adjusted data read index, and an operator with a flag during data sending (an operator that is in several restarted operators and that ranks first in a stream application sequence).

An executor of a restarted operator re-establishes a data connection relationship with an executor of an upstream or downstream operator, and recovers, from a latest completed checkpoint determined by the coordinator, status information, the to-be-adjusted data read index, and an executor of the operator with the flag during data sending. When data is read from the data plane of the data system for the first time, a flag for adjusting a start location index index of a data buffer to 0 is set to true, and data is read from a 1^{st} piece of data in replayed data buffered in the data plane of the data system (the data is a structure and includes one or more of the following elements: service stream data, a timestamp, a key value, a label, a restart flag, and the like). After receiving the data, the executor of the operator invokes the user function to perform computation, updates a maintained UUID list after the computation is completed, and then transfers a computation result, the restart flag, and a UUID of the data to the downstream operator. When data is subsequently read from the data plane of the data system, the flag for adjusting the index index to 0 is set to false, and data is read from a normal index of the replayed data buffered in the data plane of the data system. After the barrier is received, the barrier is first broadcast, through the data plane of the data system, to all downstream operators connected to the operator, then a status of the operator is stored, a checkpoint completion condition as a response is sent to the coordinator, current information in a UUID list is cleared, and finally the data system is notified that the barrier and previous data information can be cleared. Subsequent data sent to a downstream does not need to carry the restart flag.

An executor of another restarted operator processes data and the barrier in a normal procedure.

A downstream operator of an operator that is in the several restarted operators and that ranks last in the stream application sequence does not need to be restarted. After receiving data sent by an executor of an upstream restarted operator, an executor of an operator that ranks first in the stream application and that does not need to be restarted first detects whether the data carries the restart flag. If the data carries the restart flag, whether a UUID carried in the data exists in a UUID list maintained by the executor is checked. If the UUID exists, it indicates that the data has been processed, and the data is discarded; or if the UUID does not exist, a user function is invoked to perform computation, the maintained UUID list is updated after the computation is completed, and then a computation result and the UUID of the data are transferred to a downstream operator. If the restart flag is not carried, a user function is invoked to perform computation, a maintained UUID list is updated after the computation is completed, and then a computation result and the UUID of the data are transferred to a downstream operator. After the barrier is received, a status of the operator is first stored, a checkpoint completion condition as a response is sent to the coordinator, current information in the UUID list is cleared, and then the data system is notified that the barrier and previous data information can be cleared.

In this way, after one complete barrier, an entire service procedure returns to a normal processing procedure.

For scaling out of the source operator, the source operator has no upstream operator. Therefore, the coordinator only needs to notify the source operator and a downstream operator to be restarted. A restart command includes a new partitioning mode, information about a data connection between each operator and upstream and downstream operators, and corresponding status storage information, in a checkpoint, that needs to be recovered by an operator. A restarted source operator only needs to read data from a data source and then send the data to a downstream operator. Processing of a downstream operator that is restarted and a downstream operator that is not restarted is the same as that described in the foregoing embodiment.

For scaling out of the sink operator, the sink operator has no downstream operator. Therefore, the coordinator only needs to notify the sink operator and an upstream operator to be restarted. A restart command includes a new partitioning mode, information about a data connection between each operator and upstream and downstream operators, corresponding status storage information, in a checkpoint, that needs to be recovered by an operator, a to-be-adjusted data read index, and an operator with a flag during data sending (an operator that is in the several restarted operators and that ranks first in the stream application sequence). Processing of the restarted operator is the same as that described in the foregoing embodiment.

In an existing implementation, the controller node needs to control all nodes to perform restarting and obtain status data. In this embodiment of this application, after determining an operator that needs to be scaled, the controller node may control only a node executing the operator (and an adjacent node of the node executing the operator) to perform restarting and configuration, and another node except for the node executing the operator (and the adjacent node of the node executing the operator) may maintain normal operator execution, and does not need to perform restarting or obtain status data. This reduces impact of operator scaling on operating of a system node, and further reduces a delay of an entire task procedure.

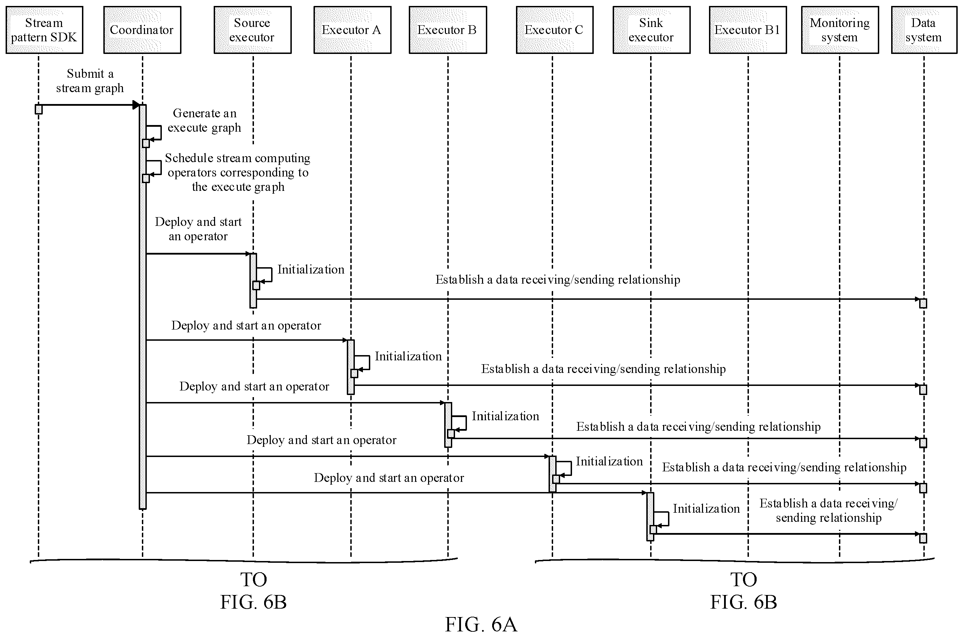

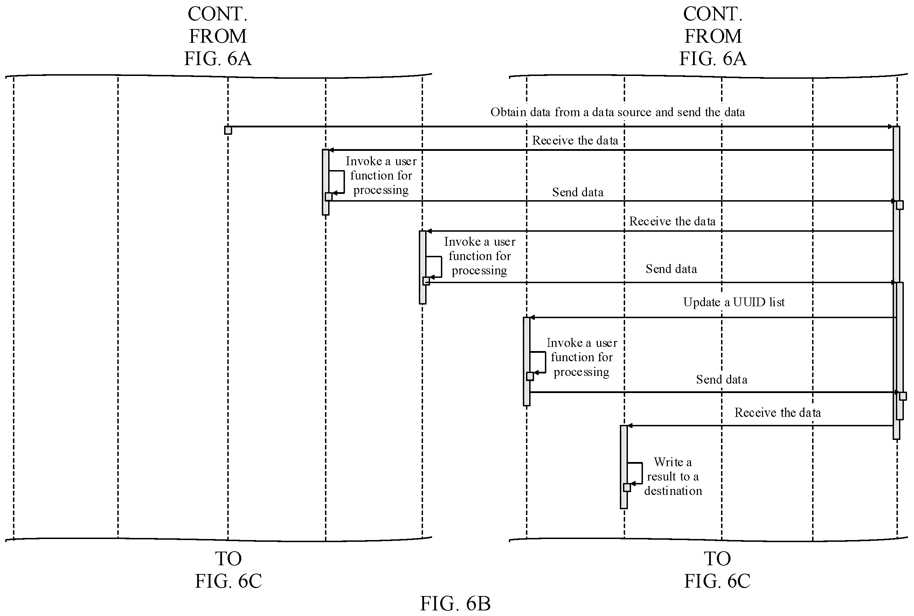

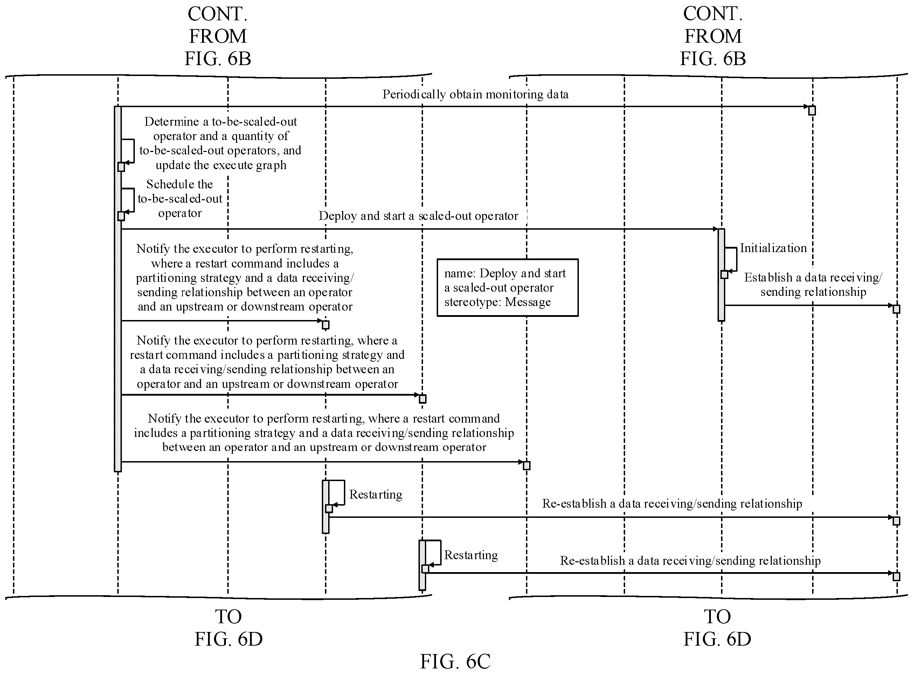

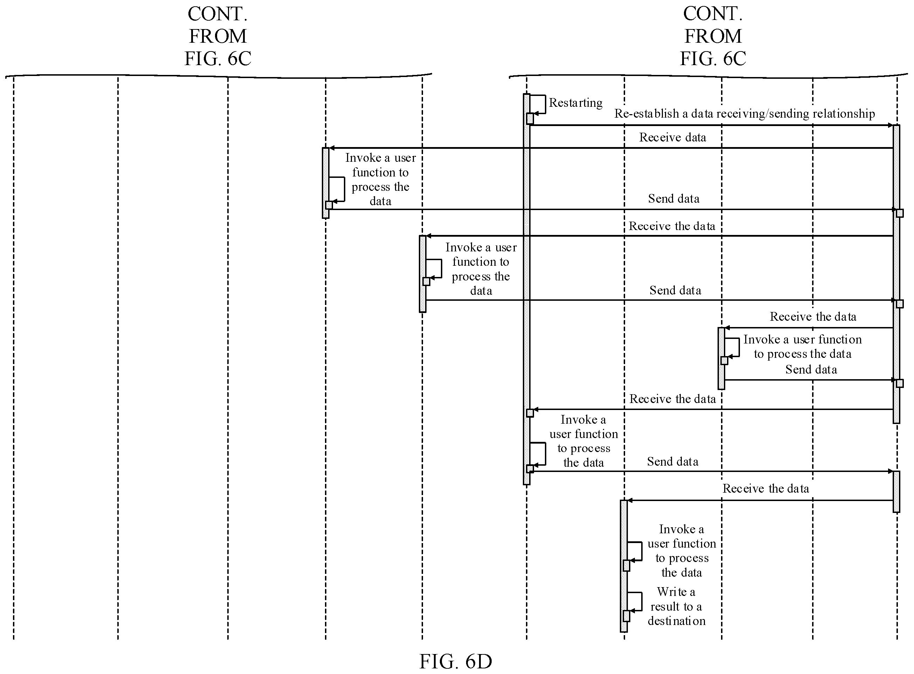

FIG. 6 is a schematic flowchart of stateless stream computing. For stateless stream computing and configuration of a checkpoint mechanism and a checkpoint-related parameter, no status needs to be stored in an entire stream application. Therefore, in a core procedure, except that no status value needs to be stored, other procedures are the same as procedures in a stateful stream application, and a flowchart is also similar to that in FIG. 5.

A procedure in which a stream application user does not configure the checkpoint-related parameter is as follows.

A coordinator generates an execute graph based on a stream application compiled by a user, schedules each operator in the execute graph, and deploys and starts an operator based on a scheduling result. For stateless computing, the stream application user does not need to configure the checkpoint-related parameter. In this case, no information is stored in the entire stream application, and a barrier is not triggered periodically.

An executor of a source operator invokes a source operator function of the user to read data from a data source and transfers service data to a downstream operator. Data is transferred through a data plane of a data system.

An executor of a non-source operator receives, from the data plane of the data system, data sent by an upstream operator, extracts user data, invokes a user function to perform computation, transfers a computation result to a downstream operator, and then notifies the data system that received data information can be cleared.

An executor of a sink operator receives, from the data plane of the data system, data sent by an upstream operator, extracts user data, invokes a user function to write the data to an output system, and then notifies the data system that received data information can be cleared.

The coordinator starts to dynamically adjust a degree of parallelism of an operator.

When the coordinator detects, by using a detection system, that data is stacked or a data amount decreases in a service stream operator, and that a back pressure value exceeds a threshold or is lower than the threshold, an operator scaling operation is triggered (the following procedure uses a degree of parallelism of a scaled-out operator as an example, and a degree of parallelism of a scaled-in operator is similar to that of the scaled-out operator). The coordinator determines a to-be-scaled-out operator, then determines an upstream or downstream operator connected to the operator, and updates, to the execute graph, a data partitioning mode, a degree of parallelism of the operator, and a data receiving/sending producer/consumer relationship between the operator and the upstream or downstream operator. The coordinator schedules, deploys, and starts an executor of a new scaled-out operator. After the executor of the new scaled-out operator is successfully started, the coordinator notifies an executor of the original to-be-scaled-out operator, and an executor that is of an upstream or downstream operator and that is connected to the executor of the operator to perform restarting. A restart command includes a new partitioning mode and information about a data connection between each operator and upstream and downstream operators.

An executor of a restarted operator re-establishes a data connection relationship with an executor of an upstream or downstream operator, and then reads data from the data plane of the data system. After receiving the data, the executor of the operator invokes a user function to perform computation, transfers a computation result to the downstream operator, and then notifies the data system that received data information can be cleared.

An executor of another restarted operator processes data in a normal procedure.

A downstream operator of an operator that is in several restarted operators and that ranks last in a stream application sequence does not need to be restarted. After data sent by an executor of an upstream restarted operator is received, an executor of an operator that ranks first in the stream application and that does not need to be restarted invokes a user function to perform computation, transfers a computation result to a downstream operator, and then notifies the data system that received data information can be cleared.

With reference to a specific example, the following describes an embodiment of operator scale-out in stateful stream computing.

A stream application user compiles a stateful streaming service application through a stream pattern SDK interface, configures a checkpoint-related parameter through the stream pattern SDK interface, such as a checkpoint detection interval, a checkpoint execution timeout period, or a maximum quantity of checkpoints in running, and then submits the streaming service application.

A deployed software system receives the submitted streaming service application and starts a coordinator.

The coordinator generates an execute graph based on a stream application compiled by a user, schedules each operator in the execute graph, and deploys and starts an operator based on a scheduling result. In embodiments, six operators: a source, A, B, C, D, and a sink are started, and may be specifically shown in FIG. 3 and FIG. 4.

An executor of the source operator invokes a source operator function of the user to read data from a data source. The executor of the source operator generates a UUID for each piece of data. The executor transfers the UUID and service stream data to a downstream operator. Data is transferred through a data plane of a data system.

An executor of a non-source operator receives, from the data plane of the data system, data sent by an upstream operator, extracts user data, invokes a user function to perform computation, updates a maintained UUID list after the computation is completed, and then transfers a computation result, a timestamp, a key value, a label, a UUID of the data, and the like to a downstream operator.

An executor of a sink operator receives, from the data plane of the data system, data sent by an upstream operator, extracts user data, and invokes a user function to write the data to an output system.

The coordinator starts a checkpoint, stores a status, and starts to dynamically adjust a degree of parallelism of an operator.

The coordinator periodically sends a checkpoint start message to the executor of the source operator based on checkpoint information configured by the user.

The executor of the source operator receives the checkpoint start message, constructs a piece of data of a barrier type, sends the data to the data plane of the data system of all connected downstream operators in a broadcast manner, then stores a status of the operator, and sends a checkpoint completion condition as a response to the coordinator.

If the executor of the non-source operator (operator A/B/C/D) receives the service data sent by the upstream, the executor stores UUID information carried in the data to a UUID list, invokes the user function to perform computation, and then sends a computation result and the UUID to the data plane of the data system. The data system sends the computation result and the UUID to the downstream operator. If a barrier is received, the barrier is first broadcast, through the data plane of the data system, to all downstream operators connected to the operator, then the status of the operator is stored, a checkpoint completion condition as a response is sent to the coordinator, current information in the UUID list is cleared, and finally the data system is notified that the barrier and previous data information can be cleared.

If the executor of the sink operator receives the service data sent by the upstream, the executor stores UUID information carried in the data to a UUID list, and then invokes the user function to write the data to an output specified by the user. If the barrier is received, a status of the operator is first stored, a checkpoint completion condition as a response is sent to the coordinator, current information in the UUID list is cleared, and then the data system is notified that the barrier and previous data information can be cleared.

In this way, one complete checkpoint is completed. The coordinator changes the checkpoint from a pending state to a completed state.

When the coordinator detects, by using a detection system, that data is stacked in a service stream operator B and that a back pressure value exceeds a threshold, an operator scale-out operation is triggered. The coordinator can use one of scaling algorithms to determine a to-be-scaled-out operator and a quantity of to-be-scaled-out operators. For example, the coordinator collects a buffer idle ratio of the data system on each node once every minute, marks each operator as OK/HIGH/LOW through threshold division, then sorts, based on a buffer usage ratio, the operators marked as HIGH, determines that the operator B needs to be scaled out, and determines the quantity of to-be-scaled-out operators based on a ratio a of a current buffer usage ratio to a maximum value (namely, 0.1) of an OK threshold, and (a-1)*current quantity of operators. After the to-be-scaled-out operator and the quantity of to-be-scaled-out operators are determined, an upstream or downstream operator connected to the operator is determined, where the upstream operator is the operator A, and the downstream operator is the operator C. A data partitioning mode and a degree of parallelism of the operator are updated to the execute graph. The coordinator schedules, deploys, and starts an executor of a new scaled-out operator B1. After the executor of the new scaled-out operator B1 is successfully started (including establishing a data connection relationship with an executor of the upstream operator A and an executor of the downstream operator C), the coordinator notifies an executor of the original operator B and executors of the operators A and C to perform restarting. A restart command includes a new partitioning mode (a partitioning mode of the operator A is RoundRobin, a partitioning mode of the operator B1 is Forword, a partitioning mode of an operator B2 is Forward, and a partitioning mode of the operator C is Forword), information about a data connection between each operator and upstream and downstream operators (an upstream operator of the operator A is a source, downstream operators of the operator A are the operator B1 and the operator B2, an upstream operator of the operator B1 is the operator A, a downstream operator of the operator B1 is an operator C, an upstream operator of the operator B2 is an operator A, a downstream operator of the operator B2 is the operator C, upstream operators of the operator C are the operator B1 and the operator B2, and a downstream operator of the operator C is an operator D), corresponding status storage information, in the checkpoint, that needs to be recovered by an operator, a to-be-adjusted data read index, and the operator A having a data flag during data sending.

An executor of a restarted operator A/B1/C re-establishes a data connection relationship with an executor of an upstream or downstream operator and recovers status information from a corresponding checkpoint. When the executor of the operator A reads data from the data plane of the data system for the first time, a flag for adjusting an index index to 0 is set to true, and data is read from a 1^{st} piece of data in replayed data buffered in the data plane of the data system. After receiving the data, the executor of the operator invokes a user function to perform computation, updates a maintained UUID list after the computation is completed, and then transfers a computation result, a restart flag, and a UUID of the data to a downstream operator. When data is subsequently read from the data plane of the data system, the flag for adjusting the index index to 0 is set to false, and data is read from a normal index of the replayed data buffered in the data plane of the data system. After the barrier is received, the barrier is first broadcast, through the data plane of the data system, to all downstream operators connected to the operator, then a status of the operator is stored, a checkpoint completion condition as a response is sent to the coordinator, current information in a UUID list is cleared, and finally the data system is notified that the barrier and previous data information can be cleared. Subsequent data sent to a downstream does not need to carry the restart flag.

An executor of another restarted operator B1/C processes data and the barrier in a normal procedure. An executor of a new deployed and started operator B2 processes data and a barrier in a normal procedure.

A downstream operator of the operator C does not need to be restarted. After receiving data sent by an executor of an upstream restarted operator, an executor of the operator D first detects whether the data carries a restart flag. If the data carries the restart flag, whether a UUID carried in the data exists in a UUID list maintained by the executor is checked. If the UUID exists, it indicates that the data has been processed, and the data is discarded; or if the UUID does not exist, a user function is invoked to perform computation, the maintained UUID list is updated after the computation is completed, and then a computation result and the UUID of the data are transferred to a downstream operator. If the restart flag is not carried, a user function is invoked to perform computation, a maintained UUID list is updated after the computation is completed, and then a computation result and the UUID of the data are transferred to a downstream operator. After the barrier is received, a status of the operator is first stored, a checkpoint completion condition as a response is sent to the coordinator, current information in the UUID list is cleared, and then the data system is notified that the barrier and previous data information can be cleared.

In this way, after one complete barrier, an entire service procedure returns to a normal processing procedure.

In an existing implementation, a controller node needs to control all nodes to perform restarting and obtain status data. In this embodiment of this application, after determining an operator that needs to be scaled, the controller node may control only a node executing the operator (and an adjacent node of the node executing the operator) to perform restarting and configuration, and another node except for the node executing the operator (and the adjacent node of the node executing the operator) may maintain normal operator execution, and does not need to perform restarting or obtain status data. This reduces impact of operator scaling on operating of a system node, and further reduces a delay of an entire task procedure.

With reference to a specific example, the following describes an embodiment of operator scale-in in stateful stream computing.

A stream application user compiles a stateful streaming service application through a stream pattern SDK interface, configures a checkpoint-related parameter through the stream pattern SDK interface, such as a checkpoint detection interval, a checkpoint execution timeout period, or a maximum quantity of checkpoints in running, and then submits the streaming service application.

A deployed software system receives the submitted streaming service application and starts a coordinator.

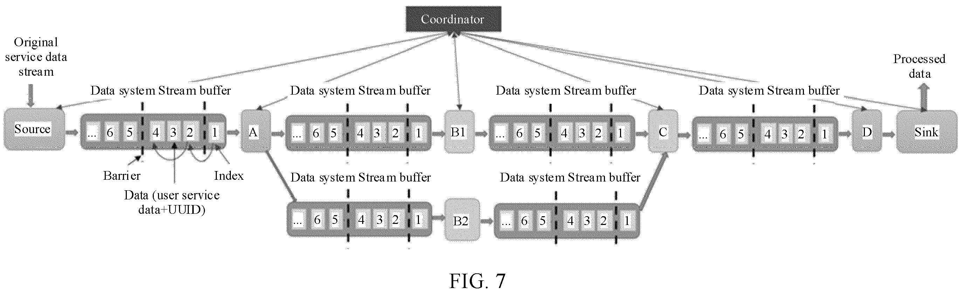

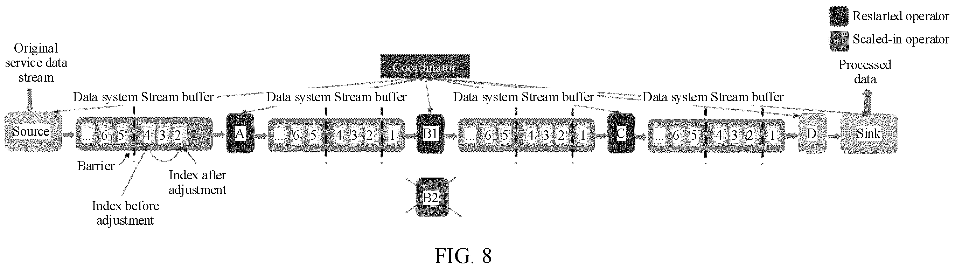

The coordinator generates an execute graph based on a stream application compiled by a user, schedules each operator in the execute graph, and deploys and starts an operator based on a scheduling result. In embodiments, seven operators: a source, A, B1, B2, C, D, and a sink are started, and may be specifically shown in FIG. 7 and FIG. 8.

An executor of the source operator invokes a source operator function of the user to read data from a data source. The executor of the source operator generates a UUID for each piece of data. The executor transfers the UUID and service stream data to a downstream operator. Data is transferred through a data plane of a data system.

An executor of a non-source operator receives, from the data plane of the data system, data sent by an upstream operator, extracts user data, invokes a user function to perform computation, updates a maintained UUID list after the computation is completed, and then transfers a computation result, a timestamp, a key value, a label, a UUID of the data, and the like to a downstream operator.

An executor of the sink operator receives, from the data plane of the data system, data sent by an upstream operator, extracts user data, and invokes a user function to write the data to an output system.

The coordinator starts a checkpoint, stores a status, and starts to dynamically adjust a degree of parallelism of an operator.

The coordinator periodically sends a checkpoint start message to the executor of the source operator based on checkpoint information configured by the user.

The executor of the source operator receives the checkpoint start message, constructs a piece of data of a barrier type, sends the data to the data plane of the data system of all connected downstream operators in a broadcast manner, then stores a status of the operator, and sends a checkpoint completion condition as a response to the coordinator.

If the executor of the non-source operator (operator A/B1/B2/C/D) receives the service data sent by the upstream, the executor stores UUID information carried in the data to the UUID list, invokes the user function to perform computation, and then sends a computation result and the UUID to the data plane of the data system. The data system sends the computation result and the UUID to the downstream operator. If a barrier is received, the barrier is first broadcast, through the data plane of the data system, to all downstream operators connected to the operator, then a status of the operator is stored, a checkpoint completion condition as a response is sent to the coordinator, current information in the UUID list is cleared, and finally the data system is notified that the barrier and previous data information can be cleared.

If the executor of the sink operator receives the service data sent by the upstream, the executor stores UUID information carried in the data to a UUID list, and then invokes a user function to write the data to an output specified by the user. If the barrier is received, a status of the operator is first stored, a checkpoint completion condition as a response is sent to the coordinator, current information in the UUID list is cleared, and then the data system is notified that the barrier and previous data information can be cleared.

In this way, one complete checkpoint is completed. The coordinator changes the checkpoint from a pending state to a completed state.

When the coordinator detects, by using a detection system, that a data amount of a service stream operator B decreases and that a back pressure value is lower than a threshold, an operator scale-in operation is triggered. The coordinator can use one of scaling algorithms to determine a to-be-scaled-in operator and a quantity of to-be-scaled-in operators. For example, the coordinator collects a buffer idle ratio of the data system on each node once every minute, marks each operator as OK/HIGH/LOW through threshold division, then sorts, based on a buffer usage ratio, the operators marked as LOW, determines that the operator B needs to be scaled in, and determines the to-be-scaled-in operator and the quantity of to-be-scaled-in operators based on a ratio a of a maximum value (namely, 0.5) of an OK threshold to a current buffer usage ratio, quantity of required operators=quantity of degrees of parallelism of the operator B/a, and quantity of to-be-scaled-in operators=current quantity of operators-quantity of required operators; and then an upstream or downstream operator connected to the operator is determined, where the upstream operator is the operator A, and the downstream operator is the operator C. A data partitioning mode and a degree of parallelism of the operator are updated to the execute graph. The coordinator stops an executor of the operator B2. The coordinator notifies an executor of the operator B1, an executor of the operator A, and an executor of the operator C to perform restarting. A restart command includes a new partitioning mode (a partitioning mode of the operator A is Forword, a partitioning mode of the operator B1 is Forword, and a partitioning mode of the operator C is Forword), information about a data connection between each operator and upstream and downstream operators (an upstream operator of the operator A is the source, a downstream operator of the operator A is the operator B1, an upstream operator of the operator B1 is the operator A, a downstream operator of the operator B1 is the operator C, an upstream operator of the operator C is the operator B1, and a downstream operator of the operator C is the operator D), corresponding status storage information, in a checkpoint, that needs to be recovered by the operator, a to-be-adjusted data read index, and the operator A with a flag during data sending.

An executor of a restarted operator A/B1/C re-establishes a data connection relationship with an executor of an upstream or downstream operator and recovers status information from a corresponding checkpoint. When the executor of the operator A reads data from the data plane of the data system for the first time, a flag for adjusting an index index to 0 is set to true, and data is read from a 1^{st} piece of data in replayed data buffered in the data plane of the data system. After receiving the data, the executor of the operator invokes a user function to perform computation, updates a maintained UUID list after the computation is completed, and then transfers a computation result, a restart flag, and a UUID of the data to a downstream operator. When data is subsequently read from the data plane of the data system, the flag for adjusting the index index to 0 is set to false, and data is read from a normal index of the replayed data buffered in the data plane of the data system. After the barrier is received, the barrier is first broadcast, through the data plane of the data system, to all downstream operators connected to the operator, then a status of the operator is stored, a checkpoint completion condition as a response is sent to the coordinator, current information in a UUID list is cleared, and finally the data system is notified that the barrier and previous data information can be cleared. Subsequent data sent to a downstream does not need to carry the restart flag.

An executor of another restarted operator B1/C processes data and the barrier in a normal procedure.

A downstream operator of the operator C does not need to be restarted. After receiving data sent by an executor of an upstream restarted operator, an executor of the operator D first detects whether the data carries a restart flag. If the data carries the restart flag, whether a UUID carried in the data exists in a UUID list maintained by the executor is checked. If the UUID exists, it indicates that the data has been processed, and the data is discarded; or if the UUID does not exist, a user function is invoked to perform computation, the maintained UUID list is updated after the computation is completed, and then a computation result and the UUID of the data are transferred to a downstream operator. If the restart flag is not carried, a user function is invoked to perform computation, a maintained UUID list is updated after the computation is completed, and then a computation result and the UUID of the data are transferred to a downstream operator. After the barrier is received, a status of the operator is first stored, a checkpoint completion condition as a response is sent to the coordinator, current information in the UUID list is cleared, and then the data system is notified that the barrier and previous data information can be cleared.

In this way, after one complete barrier, an entire service procedure returns to a normal processing procedure.

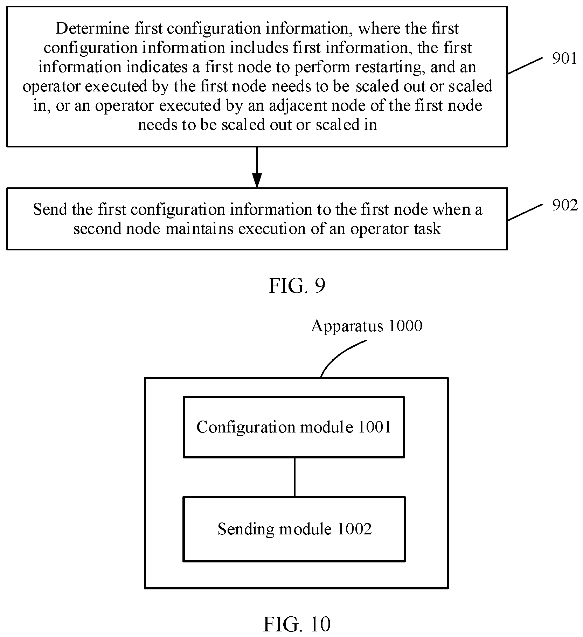

Based on the foregoing idea, refer to FIG. 9. FIG. 9 is a schematic flowchart of a node configuration method according to an embodiment of this application. As shown in FIG. 9, the method is applied to a controller node. The controller node is connected to a plurality of nodes, each of the nodes is configured to execute a part of operators in an algorithm, the plurality of nodes implement stream computing of the algorithm through data transmission, and the plurality of nodes include a first node and a second node. The method includes the following steps.

901: Determine first configuration information, where the first configuration information includes first information, the first information indicates the first node to perform restarting, and an operator executed by the first node needs to be scaled out or scaled in, or an operator executed by an adjacent node of the first node needs to be scaled out or scaled in.

902: Send the first configuration information to the first node when the second node maintains execution of an operator task.

In a possible implementation, when the second node maintains execution of the operator task, that is, when it is determined that the first node is a node executing operator scaling (or an adjacent node of the node executing operator scaling), and when it is determined that the second node is neither the node executing operator scaling nor the adjacent node of the node executing operator scaling, the controller node may send, to the first node, information indicating restarting, and does not send, to the second node, the information indicating restarting. Because the second node fails to receive a restart command sent by the controller node, normal operator execution can be maintained and is not affected.

In an existing implementation, all nodes need to perform restarting when operator scaling is performed, in other words, all source nodes perform restarting. Because the source node is an input side of service data, during restarting, an input of the service data is blocked, and the service data is not stored for a long time. As a result, a timeout may occur, resulting in a data loss and an inaccurate computation result. In this embodiment of this application, when the source node is not a node (for example, the second node) in which a relationship of data transmission between nodes is affected due to operator scaling, the source node does not need to perform restarting. This can ensure that the input of the service data is not blocked, and no data loss is caused due to a timeout.

In a possible implementation, the first configuration information further includes second information, and the second information indicates the first node to obtain, from a storage location corresponding to a checkpoint (checkpoint), historical status data generated when an operator is executed.

During configuration (including restarting) of the node executing operator scaling, some computed status data has been generated and sent to a node of a to-be-adjusted operator. However, a status of these operators has changed due to adjustment of a degree of parallelism. Consequently, corresponding information cannot be found in the status data, and an error occurs, resulting in a data loss. In this application, for a node that needs to perform restarting, backup historical status data may be obtained from the checkpoint. This ensures that data is not lost.

In a possible implementation,
an operator executed by the second node does not need to be scaled out or scaled in; or
an operator executed by an adjacent node of the second node does not need to be scaled out or scaled in.

In a possible implementation, if the first node is a node that is closest to a source node and that is in a plurality of nodes in which a relationship of data transmission between nodes is affected due to operator scaling (or the first node is the source node), the first node needs to actively obtain input data, where the input data is a 1^{st} computation result obtained by an adjacent upstream node after a last checkpoint (if the first node is the source node, a 1^{st} piece of to-be-processed service data after the checkpoint needs to be obtained), and an operation corresponding to an operator is performed based on the obtained input data (and status data). The obtained computation result may be transferred to an adjacent downstream node.

For a service node, the service node cannot actively determine whether the service node is a node that is closest to the source node and that is in the plurality of nodes in which the relationship of data transmission between the nodes is affected due to operator scaling, and this information may be determined by the controller node. Therefore, the controller node needs to send indication information to the node that is closest to the source node and that is in the plurality of nodes in which the relationship of data transmission between the nodes is affected due to operator scaling, for example, the first node is a node that is closest to the source node and that is in the plurality of nodes in which the relationship of data transmission between the nodes is affected due to operator scaling. The first configuration information sent by the controller node to the first node may further include third information, the third information indicates the first node to obtain input data from storage space after performing restarting, and the input data is a 1^{st} execution result obtained by executing an operator by the second node after the checkpoint. Alternatively, the first configuration information may further include third information, the third information indicates the first node to obtain input data from storage space after performing restarting, and the input data is a 1^{st} piece of to-be-processed service data after the checkpoint.

For example, the third information may be an identifier, and the identifier may indicate that, the first node is the node that is closest to the source node and that is in the plurality of nodes in which the relationship of data transmission between the nodes is affected due to operator scaling.

In an existing implementation, all nodes need to perform restarting when operator scaling is performed, in other words, all source nodes perform restarting. Because the source node is an input side of service data, during restarting, an input of the service data is blocked, and the service data is not stored for a long time. As a result, a timeout may occur, resulting in a data loss and an inaccurate computation result. In this embodiment of this application, when the source node is not a node (for example, the second node) in which a relationship of data transmission between nodes is affected due to operator scaling, the source node does not need to perform restarting. This can ensure that the input of the service data is not blocked, and no data loss is caused due to a timeout.

In this embodiment of this application, during operator scaling, only a part of nodes perform restarting. For the node that performs restarting, historically completed operator computing (for example, an operator operation completed after an adjacent last checkpoint) may need to be repeatedly performed, and this computation result is transferred to a downstream node. If the downstream node does not perform restarting, historically received input data is received. After the downstream node historically completes operator execution of the input data, if the downstream node executes an operator operation once again based on repeatedly input data, a waste of computing resources is caused.

For a node, each piece of input data has a unique correspondence with service data, to resolve the foregoing problem. In this embodiment of this application, information indicating service data is carried in input data of a node, to indicate uniqueness of each piece of input data. Specifically, after completing operator execution based on service data, the source node may include the information indicating the service data in a computation result and transfer the computation result to a downstream node. After completing an operator operation, of input data, corresponding to the service data, each subsequent node may include the information indicating the service data in a computation result and transfer the computation result to a downstream node. In addition, each node may also maintain one piece of information indicating service data corresponding to a completed and latest performed operator operation, and determine, by comparing information that indicates service data and that is carried in input data with the information maintained by the node, whether to perform an operator operation based on the input data. If the information maintained by the node indicates that an operation of the input data has been completed, no operator operation is performed on the input data. If the information maintained by the node indicates that an operation of the input data has not been completed, an operator operation may be performed on the input data, and the information maintained by the node is updated, so that updated information indicates latest service data. In the foregoing manner, it can be ensured that a node that does not perform restarting does not repeatedly perform an operator operation. This reduces computing power overheads.

For example, the second node is an adjacent downstream node of the first node. After performing restarting, the first node may execute a first operator based on input first data, to obtain second data; and transfer the second data and first indication information to the second node, where the first indication information indicates service data corresponding to the first data. The second node is further configured to: obtain second indication information maintained by the second node, where the second indication information indicates service data corresponding to input data latest processed by the second node; and when it is determined, based on the first indication information and the second indication information, that the second data has not been executed, execute a second operator based on the second data. When it is determined, based on the first indication information and the second indication information, that the second data has been executed, a second operator may not be executed based on the second data.

In a possible implementation, the first indication information includes an identifier number of the service data corresponding to the first data.

In a possible implementation, when executing the second operator based on the second data, the second node may further change the second indication information to third indication information, where the third indication information indicates service data corresponding to the second data.

FIG. 10 is a diagram of a structure of a node configuration apparatus according to an embodiment of this application. The apparatus is located on a controller node, the controller node is connected to a plurality of nodes, each of the nodes is configured to execute a part of operators in an algorithm, the plurality of nodes implement stream computing of the algorithm through data transmission, and the plurality of nodes include a first node and a second node. The apparatus 1000 includes:
a configuration module 1001, configured to determine first configuration information, where the first configuration information includes first information, the first information indicates the first node to perform restarting, and an operator executed by the first node needs to be scaled out or scaled in, or an operator executed by an adjacent node of the first node needs to be scaled out or scaled in; and
a sending module 1002, configured to send the configuration information to the first node when the second node maintains execution of an operator task.

In a possible implementation, the first configuration information further includes second information, and the second information indicates the first node to obtain, from a storage location corresponding to a checkpoint (checkpoint), historical status data generated when an operator is executed.

In a possible implementation,
an operator executed by the second node does not need to be scaled out or scaled in; or
an operator executed by an adjacent node of the second node does not need to be scaled out or scaled in.

In a possible implementation, the second node is an adjacent upstream node of the first node, the first configuration information further includes third information, the third information indicates the first node to obtain input data from storage space after performing restarting, and the input data is a 1^{st} execution result obtained by executing an operator by the second node after the checkpoint.

In a possible implementation,
the first node is a source node in the plurality of nodes, the first configuration information further includes third information, the third information indicates the first node to obtain input data from storage space after performing restarting, and the input data is a 1^{st} piece of to-be-processed service data after the checkpoint.

In a possible implementation, the second node is a source node in the plurality of nodes.

The apparatus 1000 is configured to perform the foregoing node configuration method, and in particular, corresponds to a method performed by the foregoing controller node. Therefore, for specific implementations, descriptions, and technical effect, refer to the foregoing corresponding paragraphs. Details are not described herein again. The apparatus 1000 may be a controller node, or may be a part of the first controller node. A specific implementation of each foregoing module is not limited in this application. For example, the foregoing modules may be integrated into one module for implementation. For another example, the configuration module 1001 may be a processor or a controller, for example, may be a CPU, a general-purpose processor, a DSP, an application-specific integrated circuit (Application-Specific Integrated Circuit, ASIC), a field programmable gate array (Field Programmable Gate Array, FPGA), another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination including one or more microprocessors, or a combination of the DSP and a microprocessor.

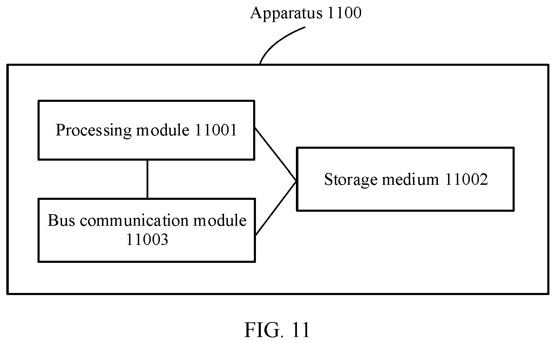

FIG. 11 is a diagram of a possible logical structure of a node configuration device according to an embodiment of this application. The device 1100 includes a storage medium 11002 and a processing module 11001. The storage medium 11002 is coupled to the processing module 11001. The storage medium 11002 is configured to store computer program code and data. The computer program code includes computer instructions. When the computer instructions are executed by the processing module 11001, the foregoing method may be performed.

The processing module 11001 may be a central processing unit, a graphics processing unit, a general-purpose processor, a digital signal processor, an application-specific integrated circuit, a field-programmable gate array, another programmable logic device, a transistor logic device, a hardware component, or any combination thereof. The processing module may implement or execute various example logical blocks, modules, and circuits described with reference to content disclosed in this application. Alternatively, the processing module 11001 may be a combination of processors implementing a computing function, for example, a combination including one or more microprocessors, or a combination of a digital signal processor and a microprocessor. The storage medium 11002 may belong to a read-only memory (read-only memory, ROM), another type of storage module that can store static information and instructions, a random access memory (random access memory, RAM), or another type of storage module that can dynamically store information and instructions, or may be an electrically erasable programmable read-only memory (electrically erasable programmable read-only memory, EEPROM) or another magnetic storage device.

The storage medium 11002 and the processing module 11001 may be connected through a bus. A layout manner of various components in the device 1100 is not limited in this application. The bus herein is a bus in the device, and may be specifically a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, or the like. For ease of representation, the bus is represented by using only one thick line in FIG. 11. However, it does not indicate that there is only one bus or only one type of bus in the device 1100.

The device 1100 corresponding to FIG. 11 may be a device in which the foregoing controller node is located, and is configured to perform the method performed by the foregoing controller node. Therefore, for specific implementations, descriptions, and technical effect, refer to corresponding paragraphs of the foregoing method, apparatus, and system. Details are not described herein again.

In an embodiment, the device 1100 may include a plurality of processors. Each of the processors may be a single-core processor, or may be a multi-core processor. The processor herein may be one or more devices, circuits, and/or processing cores configured to process data (for example, computer program instructions). In addition, the computer program code in embodiments of this application may also be briefly referred to as a computer program or code, or may have another name, and the computer instructions may also be briefly referred to as instructions or commands. This is not specifically limited in embodiments of this application.

In addition, a person skilled in the art may understand that the device 1100 may include fewer or more components than those shown FIG. 11. FIG. 11 merely shows components more related to a plurality of implementations disclosed in embodiments of the present invention. In an embodiment, the device 1100 may further include an output device and an input device. The output device communicates with the foregoing processing circuit (for example, the processing module 11001 or the processing circuit), and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor, and may receive an input from a user in a plurality of manners. For example, the input device may be a mouse, a keyboard, a touchscreen device, a sensing device, or the like. In addition, FIG. 11 does not show a high-performance interconnect bus, namely, a bus that is used for communication between devices, is connected through a bus endpoint, and has a function similar to that of a wireless network.

It may be understood that, to implement the foregoing functions, the device or apparatus includes a corresponding hardware structure and/or software module for performing the functions. A person skilled in the art should be easily aware that, in combination with units and algorithm steps of the examples described in embodiments disclosed in this specification, embodiments of this application may be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, the foregoing device (for example, 1100) or apparatus (for example, 1000) may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely logical function division. In actual implementation, another division manner may be used.

An embodiment of this application further provides a chip system. The chip system is applied to the foregoing device. The chip system includes one or more interface circuits and one or more processors. The interface circuit and the processor are connected to each other through a line. The interface circuit is configured to receive a signal from a memory of the device, and send the signal to the processor. The signal includes computer instructions stored in the memory. When the processor executes the computer instructions, the foregoing device performs any method performed by the first node in the foregoing method embodiment, or performs any method performed by the second node in the foregoing method embodiment.

An embodiment of this application further provides a computer storage medium. The computer storage medium includes computer instructions. When the computer instructions are run on a device, the device is enabled to perform any method performed by the first node in the foregoing method embodiment, or perform any method performed by the second node in the foregoing method embodiment.

An embodiment of this application further provides a computer program product. When the computer program product runs on a computer, a device is enabled to perform any method performed by the first node in the foregoing method embodiment, or perform any method performed by the second node in the foregoing method embodiment.

The device, the chip system, the computer storage medium, and the computer program product provided in this application are all configured to perform the corresponding method provided in the foregoing descriptions. Therefore, for beneficial effect that can be achieved by the device, the chip system, the computer storage medium, and the computer program product, refer to the beneficial effect of the corresponding method provided in the foregoing descriptions. Details are not described herein again.

The foregoing descriptions about implementations allow a person skilled in the art to clearly understand that, for a purpose of convenient and brief description, division of the foregoing functional modules is used as an example for illustration. In actual application, the foregoing functions may be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate components may or may not be physically separate. A component displayed as a unit may be one or more physical units, that is, may be located in one place, or may be distributed in a plurality of different places. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the method described in embodiments of this application. The foregoing storage medium includes any medium that can store program code such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A node configuration method, applied to a controller node, wherein the controller node is connected to a plurality of nodes, each of the nodes is configured to execute a part of operators in an algorithm, the plurality of nodes implement stream computing of the algorithm through data transmission, and the plurality of nodes comprise a first node and a second node; and the method comprises:
determining first configuration information, wherein the first configuration information comprises first information, the first information indicates the first node to perform restarting, and an operator executed by the first node needs to be scaled out or scaled in, or an operator executed by an adjacent node of the first node needs to be scaled out or scaled in; and
sending the first configuration information to the first node when the second node maintains execution of an operator task.

2. The method according to claim 1, wherein the first configuration information further comprises second information, and the second information indicates the first node to obtain, from a storage location corresponding to a checkpoint (checkpoint), historical status data generated when an operator is executed.

3. The method according to claim 1 or 2, wherein
an operator executed by the second node does not need to be scaled out or scaled in; or
an operator executed by an adjacent node of the second node does not need to be scaled out or scaled in.

4. The method according to any one of claims 1 to 3, wherein the second node is an adjacent upstream node of the first node, the first configuration information further comprises third information, the third information indicates the first node to obtain input data from storage space after performing restarting, and the input data is a 1^{st} execution result obtained by executing an operator by the second node after the checkpoint.

5. The method according to any one of claims 1 to 3, wherein the first node is a source node in the plurality of nodes, the first configuration information further comprises third information, the third information indicates the first node to obtain input data from storage space after performing restarting, and the input data is a 1^{st} piece of to-be-processed service data after the checkpoint.

6. The method according to any one of claims 1 to 4, wherein the second node is a source node in the plurality of nodes.

7. A system, comprising a controller node, wherein the controller node is connected to a plurality of nodes, each of the nodes is configured to execute a part of operators in an algorithm, the plurality of nodes implement stream computing of the algorithm through data transmission, and the plurality of nodes comprise the first node and the second node;
the controller node is configured to send first configuration information to the first node, wherein the first configuration information comprises first information, the first information indicates the first node to perform restarting, and an operator executed by the first node needs to be scaled out or scaled in, or an operator executed by an adjacent node of the first node needs to be scaled out or scaled in; and
when the first node performs restarting based on the first configuration information, the second node is configured to maintain execution of an operator task.

8. The system according to claim 7, wherein the first node is further configured to: after performing restarting, execute a first operator based on input first data, to obtain second data; and
transfer the second data and second indication information to the second node, wherein the second indication information indicates service data corresponding to the first data; and
the second node is further configured to: obtain third indication information, wherein the third indication information indicates service data corresponding to input data latest processed by the second node; and
when it is determined, based on the first indication information and the second indication information, that the second data has not been executed, execute a second operator based on the second data.

9. The system according to claim 8, wherein the second indication information comprises an identifier number of the service data corresponding to the first data.

10. The system according to claim 8 or 9, wherein the second node is further configured to: change the third indication information to fourth indication information, wherein the fourth indication information indicates service data corresponding to the second data.

11. The system according to any one of claims 8 to 10, wherein the first indication information further comprises third information, and the third information indicates the first node to obtain the first data from storage space after performing restarting; and
the first data is a 1^{st} execution result obtained by executing an operator by an upstream node of the first node after the checkpoint, or the first data is a 1^{st} piece of to-be-processed service data after the checkpoint.

12. A node configuration apparatus, wherein the apparatus is located on a controller node, the controller node is connected to a plurality of nodes, each of the nodes is configured to execute a part of operators in an algorithm, the plurality of nodes implement stream computing of the algorithm through data transmission, and the plurality of nodes comprise a first node and a second node; and the apparatus comprises:
a configuration module, configured to determine first configuration information, wherein the first configuration information comprises first information, the first information indicates the first node to perform restarting, and an operator executed by the first node needs to be scaled out or scaled in, or an operator executed by an adjacent node of the first node needs to be scaled out or scaled in; and
a sending module, configured to send the configuration information to the first node when the second node maintains execution of an operator task.

13. The apparatus according to claim 12, wherein the first configuration information further comprises second information, and the second information indicates the first node to obtain, from a storage location corresponding to a checkpoint (checkpoint), historical status data generated when an operator is executed.

14. The apparatus according to claim 12 or 13, wherein
an operator executed by the second node does not need to be scaled out or scaled in; or
an operator executed by an adjacent node of the second node does not need to be scaled out or scaled in.

15. The apparatus according to any one of claims 12 to 14, wherein the second node is an adjacent upstream node of the first node, the first configuration information further comprises third information, the third information indicates the first node to obtain input data from storage space after performing restarting, and the input data is a 1^{st} execution result obtained by executing an operator by the second node after the checkpoint.

16. The apparatus according to any one of claims 12 to 14, wherein
the first node is a source node in the plurality of nodes, the first configuration information further comprises third information, the third information indicates the first node to obtain input data from storage space after performing restarting, and the input data is a 1^{st} piece of to-be-processed service data after the checkpoint.

17. The apparatus according to any one of claims 12 to 15, wherein the second node is a source node in the plurality of nodes.

18. A chip, wherein the chip comprises a processing circuit and an interface circuit, the interface circuit is interconnected to the processing circuit through a line, the interface circuit is configured to receive a signal from a storage medium, and send the signal to the processor, the signal comprises computer instructions stored in the storage medium, and when the computer instructions are executed by the processing circuit, the chip performs the node configuration method according to any one of claims 1 to 6.

19. A node configuration device, wherein the device comprises a storage medium and a processing circuit, the storage medium is coupled to the processing circuit, the storage medium is configured to store computer program code, the computer program code comprises computer instructions, and when the computer instructions are executed by the processing circuit, the node configuration method according to any one of claims 1 to 6 is performed.

20. A computer storage medium, comprising computer instructions, wherein when the computer instructions are run on a computer, the computer is enabled to perform the node configuration method according to any one of claims 1 to 6.

21. A computer program product, comprising a computer program, wherein when being executed by one or more processors, the computer program is used to implement the method according to any one of claims 1 to 6.
